(19) Europäisches Patentamt
European Patent Office
Office européen des brevets

(11) **EP 4 761 234 A1**

(12) **EUROPEAN PATENT APPLICATION**
published in accordance with Art. 153(4) EPC

(43) Date of publication:
**17.06.2026 Bulletin 2026/25**

(21) Application number: **24851422.6**

(22) Date of filing: **24.06.2024**

(51) International Patent Classification (IPC):
**H04N 7/18** (2006.01)     **H04N 5/262** (2006.01)

(52) Cooperative Patent Classification (CPC):
**H04N 5/262; H04N 7/18**

(86) International application number:
**PCT/JP2024/022709**

(87) International publication number:
**WO 2025/032989 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.08.2023 JP 2023129109**

(71) Applicant: **Sony Group Corporation
Tokyo 108-0075 (JP)**

(72) Inventors:
• **NASHIDA, Tatsushi
Tokyo 108-0075 (JP)**
• **MINE, Ryutaro
Tokyo 108-0075 (JP)**
• **TAKAHASHI, Naomasa
Tokyo 108-0075 (JP)**

(74) Representative: **MFG Patentanwälte
Meyer-Wildhagen Meggle-Freund
Gerhard PartG mbB
Amalienstraße 62
80799 München (DE)**

(54) **INFORMATION PROCESSING DEVICE, INFORMATION PROCESSING METHOD, AND COMPUTER-READABLE RECORDING MEDIUM**

(57)     An information processing apparatus according to an embodiment of the present technology information includes an acquisition section, a determination section, and a control section. The acquisition section acquires a viewpoint position of a subject of which an image is captured using a screen for chroma-key compositing that is provided in a real space, an attention-focused position that the subject is desired to look at, and virtual-space information that indicates a position of the screen in a virtual three-dimensional space. The determination section determines a virtual point of intersection of a virtual line and the screen indicated by the virtual-space information, the virtual line connecting the viewpoint position of the subject and the attention-focused position in the virtual three-dimensional space. The control section controls an irradiation direction of irradiation performed by an irradiation apparatus provided in the real space, such that a guidance point on the screen that corresponds to the virtual point of intersection in the real space is pointed.

FIG.1

## Description

Technical Field

The present technology relates to an information processing apparatus, an information processing method, and a computer-readable recording medium that are used to, for example, guide a line of sight of a subject.

Background Art

Patent Literature 1 discloses a display imaging apparatus in which a transmissive display is arranged between a camera and a user, and a video call system that uses the apparatus. In this system, an image of a user who is looking at a display that displays thereon a partner at the other end of the line is captured using the camera situated behind the display. This makes it possible to display, to the partner at the other end of the line, a video of the user facing the front. This makes it possible to render a line of sight of the user and a line of sight of the partner at the other end of the line coincident (for example, paragraphs [0012], [0060], and [0061] of the specification and Figs. 1 and 7 in Patent Literature 1).

Citation List

Patent Literature

Patent Literature 1: WO 2019/207922

Disclosure of Invention

Technical Problem

In recent years, a technology used to combine live-action videos of a subject to recreate the subject in, for example, a virtual space has attracted attention. When videos used for combining are captured, a screen for chroma-key compositing is used. Basically, such a screen has less features, and sometimes a subject has no idea where to focus attention during image-capturing. For example, a display or the like is used to guide a line of sight of a subject, the display or the like appears in a video of the subject, and this may result in difficulty in extracting a subject image properly.

In view of the circumstances described above, it is an object of the present technology to provide an information processing apparatus, an information processing method, and a computer-readable recording medium that make it possible to guide a line of sight of a subject without reducing the performance in extracting a subject image.

Solution to Problem

In order to achieve the object described above, an information processing apparatus according to an embodiment of the present technology information includes an acquisition section, a determination section, and a control section. The acquisition section acquires a viewpoint position of a subject of which an image is captured using a screen for chroma-key compositing that is provided in a real space, an attention-focused position that the subject is desired to look at, and virtual-space information that indicates a position of the screen in a virtual three-dimensional space. The determination section determines a virtual point of intersection of a virtual line and the screen indicated by the virtual-space information, the virtual line connecting the viewpoint position of the subject and the attention-focused position in the virtual three-dimensional space. The control section controls an irradiation direction of irradiation performed by an irradiation apparatus provided in the real space, such that a guidance point on the screen that corresponds to the virtual point of intersection in the real space is pointed.

In this information processing apparatus, a virtual point of intersection at which a virtual line connecting a viewpoint position of a subject and an attention-focused position that the subject is desired to look at intersects a screen for chroma-key compositing, is determined. Then, a guidance point being situated on the actual screen and corresponding to the virtual point of intersection is pointed by the irradiation apparatus. The pointing of the guidance point makes it possible to present, to the subject, a direction in which the subject is desired to look. This makes it possible to guide a line of sight of the subject without reducing the performance in extracting a subject image.

The attention-focused position may be a viewpoint position of a viewer viewing a display apparatus that displays thereon a subject image extracted from an image of the subject that is captured, with the screen being a background.

The acquisition section may acquire the viewpoint position of the subject on the basis of images of the subject that are captured by a plurality of cameras provided in the real space such that the screen is a background in an image-capturing range.

The acquisition section may generate the virtual-space information on the basis of images captured by the plurality of cameras.

The acquisition section may capture images of a spot using the plurality of cameras, the spot being projected onto the screen by the irradiation apparatus; and may calculate three-dimensional coordinates of the spot on the basis of the images captured using the plurality of cameras.

The control section may calculate the irradiation direction on the basis of a position of the irradiation apparatus and a position of the guidance point in the real space.

The control section may calculate rotation angles of the irradiation direction with respect to a reference irradiation direction that serves as a reference of the irradiation direction in the irradiation apparatus.

The control section may calibrate the position of the irradiation apparatus and the reference irradiation direction on the basis of the rotation angles of the irradiation direction when the irradiation apparatus projects a spot onto each of the plurality of cameras and on the basis of installation positions of the plurality of cameras.

The irradiation apparatus may include a position-detection marker. In this case, the control section may calculate the position of the irradiation apparatus and the reference irradiation direction on the basis of images of the position-detection marker of the irradiation apparatus that are captured by the plurality of cameras.

The control section may determine whether an irradiation path that connects the position of the irradiation apparatus and the guidance point in the real space passes through a non-irradiation region in which pointing to the guidance point is to be avoided, and when it has been determined that the irradiation path passes through the non-irradiation region, the control section may stop the pointing to the guidance point.

The irradiation apparatus may be a laser pointer that is rotatable in an elevation direction and in an azimuth direction.

The irradiation apparatus may be a laser beam scanning projector that scans a laser beam using a movable mirror. In this case, the control section may control the projector such that a pattern that includes at least one of a word or a picture is projected onto the guidance point.

The screen may be an all-around screen that surrounds all of a periphery of an image-capturing space in which an image of the subject is captured. In this case, the control section may control the irradiation direction of irradiation performed by the irradiation apparatus, such that the guidance point in a region on the all-around screen is pointed, the region being situated in front, as viewed from the subject.

The attention-focused position may be an image-capturing position of image-capturing performed by a virtual camera set in the virtual three-dimensional space.

The attention-focused position may be a position of an attention-focused target, in a background, that the subject is desired to look at, the background being combined with a subject image extracted from a captured image of the subject.

An information processing method according to an embodiment of the present technology is an information processing method that is performed by a computer system, the information processing method including acquiring a viewpoint position of a subject of which an image is captured using a screen for chroma-key compositing that is provided in a real space, an attention-focused position that the subject is desired to look at, and virtual-space information that indicates a position of the screen in a virtual three-dimensional space. A virtual point of intersection of a virtual line and the screen indicated by the virtual-space information is determined, the virtual line connecting the viewpoint position of the subject and the attention-focused position in the virtual three-dimensional space. An irradiation direction of irradiation performed by an irradiation apparatus provided in the real space is controlled such that a guidance point on the screen that corresponds to the virtual point of intersection in the real space is pointed.

A computer-readable recording medium according to an embodiment of the present technology records therein a program that causes a computer system to perform a process including acquiring a viewpoint position of a subject of which an image is captured using a screen for chroma-key compositing that is provided in a real space, an attention-focused position that the subject is desired to look at, and virtual-space information that indicates a position of the screen in a virtual three-dimensional space; determining a virtual point of intersection of a virtual line and the screen indicated by the virtual-space information, the virtual line connecting the viewpoint position of the subject and the attention-focused position in the virtual three-dimensional space; and controlling an irradiation direction of irradiation performed by an irradiation apparatus provided in the real space, such that a guidance point on the screen that corresponds to the virtual point of intersection in the real space is pointed.

Brief Description of Drawings

[Fig. 1] Fig. 1 schematically illustrates an example of a configuration of a telepresence system according to the present embodiment.

[Fig. 2] Fig. 2 schematically illustrates an example of a configuration of an image-capturing system.

[Fig. 3] Fig. 3 schematically illustrates an example of a configuration of an irradiation apparatus.

[Fig. 4] Fig. 4 is a block diagram illustrating an example of a functional configuration of a line-of-sight guiding controller.

[Fig. 5] Fig. 5 is a schematic diagram used to describe a basic operation of a line-of-sight guiding system.

[Fig. 6] Fig. 6 is a flowchart of an example of an operation of the line-of-sight guiding system.

[Fig. 7] Fig. 7 is a flowchart of an example of a three-dimensional-space measuring process.

[Fig. 8] Fig. 8 is a schematic diagram used to describe the example of the three-dimensional-space measuring process.

[Fig. 9] Fig. 9 is a flowchart of an example of a subject viewpoint measuring process.

[Fig. 10] Fig. 10 is a schematic diagram used to describe an example of a coordinate transformation process.

[Fig. 11] Fig. 11 is a schematic diagram used to describe an example of a pointing operation of the irradiation apparatus.

[Fig. 12] Fig. 12 is a schematic diagram used to describe another example of the pointing operation of the irradiation apparatus.

[Fig. 13] Fig. 13 is a schematic diagram used to describe a method for calibrating the irradiation apparatus.

[Fig. 14] Fig. 14 is a schematic diagram used to describe another method for calibrating the irradiation apparatus.

[Fig. 15] Fig. 15 schematically illustrates another example of the configuration of the irradiation apparatus.

[Fig. 16] Fig. 16 is a schematic diagram used to describe another example of application of the line-of-sight guiding system.

[Fig. 17] Fig. 17 is a schematic diagram used to describe another example of application of the line-of-sight guiding system.

[Fig. 18] Fig. 18 is a schematic diagram used to describe another example of application of the line-of-sight guiding system.

Mode(s) for Carrying Out the Invention

Embodiments according to the present technology will now be described below with reference to the drawings.

[Overview of Telepresence System]

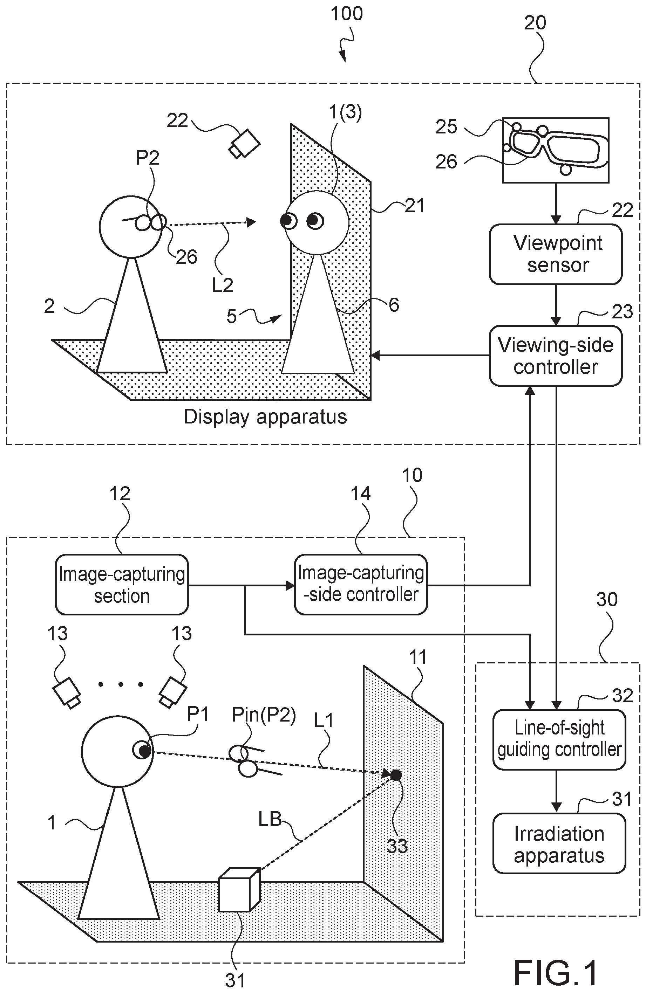

Fig. 1 schematically illustrates an example of a configuration of a telepresence system according to the present embodiment. A telepresence system 100 is a system that displays a video of a user 1 in real time at a viewing-side location, the video being captured at an image-capturing-side location. In other words, the telepresence system 100 serves as a live streaming system that provides a user 2 situated at the viewing-side location with a live video of the user 1 that is captured at the image-capturing-side location.

The user 1 of which an image is captured at an image-capturing-side location is hereinafter referred to as a subject 1, and the user 2 who is viewing the video at a viewing-side location is hereinafter referred to as a viewer 2. Further, a video that is displayed at the viewing-side location and in which the subject 1 appears is referred to as a content video 5. In the present embodiment, the content video 5 is a live video that enables a state of the subject 1 to be displayed in real time.

Fig. 1 schematically illustrates, in a lower portion, an example of the configuration of the telepresence system 100 at an image-capturing-side location, and Fig. 1 schematically illustrates, in an upper portion, an example of the configuration of the telepresence system 100 at a viewing-side location. The telepresence system 100 includes an image-capturing system 10, a display system 20, and a line-of-sight guiding system 30.

The image-capturing system 10 is a system that is provided at the image-capturing-side location, and that captures an image of the subject 1 to generate content data of the subject 1. The content data is data used to make up the content video 5 displayed at the viewing-side location. The display system 20 is a system that is provided at the viewing-side location, and that displays the content video 5 on the basis of the content data generated by the image-capturing system 10.

The line-of-sight guiding system 30 is a system that is provided at the image-capturing-side location and that guides a line of sight L1 of the subject 1 during image-capturing. The line of sight L1 of the subject 1 is controlled such that the line of sight L1 of the subject 1 displayed in the content video 5 is oriented toward a viewpoint P2 of the viewer 2. When the line of sight L1 of the subject 1 is guided as described above, this makes it possible to render a line of sight of the viewer 2 and a line of sight of the subject 1 coincident. This makes it possible to provide the viewer 2 with a natural viewing experience, with the line of sight of the viewer 2 being coincident with the line of sight of the subject 1.

[Image-Capturing System]

As illustrated in the lower portion in Fig. 1, the image-capturing system 10 includes a green screen 11, an image-capturing section 12, and an image-capturing-side controller 14. The green screen 11 and the image-capturing section 12 are mechanical equipment used for image-capturing in a real space. Here, the real space refers to a three-dimensional space that is included a real world. An image-capturing studio using the mechanical equipment is created at the image-capturing-side location (the real space). The image-capturing-side controller 14 is, for example, a computer that is provided at the image-capturing-side location, and, for example, a server apparatus that is provided at a place different from the place of the image-capturing studio may be used as the image-capturing-side controller 14.

The green screen 11 is a screen that is provided in the real space and used for chroma-key compositing. The green screen 11 includes a green surface (a screen surface) that is also called a green background, and serves as a background used to capture an image used for chroma-key compositing. In addition to the green screen 11, an image-capturing screen such as a blue screen that can be used for chroma-key compositing may be used properly. It should be noted that, in Fig. 1, an illustration of the green screen 11 being situated behind the subject 1 and used for chroma-key compositing is omitted.

The chroma-key compositing is, for example, an approach including separating a region with a uniform color from a captured image and combining another video with the separated region. For example, the use of this approach makes it possible to separate a green background from an image of the subject 1 that is captured, with the green screen 11 being a background, and to extract the subject 1 corresponding to a foreground. An image obtained by extracting the subject 1 corresponding to a foreground from a region that corresponds to a background, as described above, is referred to as a subject image 3.

The image-capturing section 12 includes a plurality of cameras 13 each used to capture an image of the subject 1. For example, any digital camera that includes an image sensor such as a complementary metal-oxide semiconductor (CMOS) sensor or a charge coupled device (CCD) sensor is used as each of the plurality of cameras 13.

Each of the plurality of cameras 13 captures an image in which the subject 1 appears. Note that examples of the image in the present disclosure include a moving image (a video) with a temporal change, and a still image without a temporal change. The case in which the plurality of cameras 13 captures videos of the subject 1 is primarily described below. However, the present technology can also be applied to the case in which a still image of the subject 1 is captured.

The cameras 13 of the plurality of cameras 13 are provided in the real space such that the green screen 11 is a background in an image-capturing range. Here, the image-capturing range refers to, for example, a range in an angle of view of the camera 13. The green screen 11 is a background for images of the subject 1 that are captured by the plurality of cameras 13. Thus, each of the images is an image from which the subject image 3 can be extracted accurately. Further, the cameras 13 of the plurality of cameras 13 are arranged to capture images of the subject 1 from different directions. This makes it possible to capture the subject images 3 of the subject viewed from various directions.

The image-capturing-side controller 14 extracts the subject image 3 from an image of the subject 1 that is captured by the image-capturing section 12 (the plurality of cameras 13), and generates content data using the subject image 3. For example, a 3D model 6 of the subject 1 can be created using the subject image 3. In this case, data of the 3D model 6 is content data. Further, an image (an extraction image) in which only the subject image 3 appears, or an image (a combining image) obtained by any background being combined with the subject image 3 may be generated as content data. The content data generated by the image-capturing-side controller 14 is transmitted to the viewing-side location through a specified network using a protocol such as a user datagram protocol (UDP).

[Display System]

As illustrated in the upper portion in Fig. 1, the display system 20 includes a display apparatus 21, a viewpoint sensor 22, and a viewing-side controller 23. The display apparatus 21 and the viewpoint sensor 22 are mechanical equipment used for display in the real space. The viewing-side controller 23 is, for example, a computer that is provided at the viewing-side location, and, for example, a server apparatus that is provided at a different place may be used as the viewing-side controller 23.

The display apparatus 21 is an apparatus that displays thereon the content video 5. As described above, the content video 5 is a video generated using the subject image 3, and the video includes the subject image 3. In other words, the display apparatus 21 can also be an apparatus that displays thereon the subject image 3 extracted from an image of the subject 1 that is captured, with the green screen 11 being a background.

For example, a display apparatus including a plurality of light-emitting diodes (LEDs) arranged on a display surface of the display apparatus (what is called an LED wall) is used as the display apparatus 21. For example, the display apparatus 21 illustrated in Fig. 1 is provided with a display surface that includes a floor surface and a vertical surface arranged vertically to the floor surface, where LEDs are used on both the floor surface and the vertical surface. For example, the combining of image display on the vertical surface and image display on the floor surface makes it possible to perform, for example, display that causes a viewer to perceive that the subject 1 pops up from the vertical surface or the floor surface.

Note that a configuration of the display apparatus 21 is not limited, and, for example, a display that includes a display element such as a liquid crystal panel or an organic EL panel may be used as the display apparatus 21. Further, the display apparatus 21 may be a display that displays the same video to two eyes of the viewer 2 or may be a display that can perform stereoscopic display that causes the viewer 2 to perceive a stereo image by independently displaying, to a right eye and a left eye of the viewer 2, images between which there is parallax. Further, a head-mounted display (HMD) worn on a head of the viewer 2 to be used by the viewer 2 may be used as the display apparatus 21.

The viewpoint sensor 22 is a sensor that detects the viewpoint P2 of the viewer 2. Specifically, the viewpoint sensor 22 is a sensor that can detect a three-dimensional position of the viewpoint P2 of the viewer 2 in the real space. A process of viewpoint detection P2 may be performed by a computational apparatus that is included in the viewpoint sensor 22 or by the viewing-side controller 23 described later.

In the example illustrated in Fig. 1, it is assumed that the viewer 2 views the display apparatus 21 in a state of wearing glasses 26 including markers 25 used for position detection. In this case, a position of the glasses 26 is detected as the viewpoint P2 of the viewer 2. Reflection markers off which infrared light is reflected are used as the markers 25 provided to the glasses 26. In this case, for example, an infrared camera that irradiates an image-capturing range with infrared light to detect reflected light of the infrared light, is used as the viewpoint sensor 22. For example, the marker 25 is detected in a video of the viewer 2 that is captured using the viewpoint sensor 22, and the position of and a pose of the glasses 26 are calculated from a positional relationship between the markers 25. This also makes it possible to detect an orientation of a line of sight L2 of the viewer 2 in addition to the position of the viewpoint P2 of the viewer 2.

The type of the viewpoint sensor 22 is not limited, and, for example, a sensor, such as a ToF camera or a stereo camera, that can detect the depth may be used as the viewpoint sensor 22. In this case, processes of detecting a face of the viewer 2 in an image captured using a camera and calculating a three-dimensional position of the viewpoint P2 of the viewer 2 are performed. Moreover, any sensors that can detect the three-dimensional position of the viewpoint P2 may be used as the viewpoint sensor 22. Further, when an HMD is used as the display apparatus 21, a three-dimensional position of the HMD at the viewing-side location may be calculated as the viewpoint P2 of the viewer 2.

The viewing-side controller 23 receives, through a specified network, content data generated at the image-capturing-side location. Further, the viewing-side controller 23 generates, on the basis of the content data, the content video 5 to be displayed on the display apparatus 21, and outputs the generated content video 5 to the display apparatus 21. In the present embodiment, the content video 5 is generated according to the viewpoint P2 of the viewer 2 that is detected using the viewpoint sensor 22. This makes it possible to generate, for example, the content video 5 in which how the subject image 3 looks is changed according to movement of the viewpoint P2 of the viewer 2.

[Specific Configuration of Image-Capturing System]

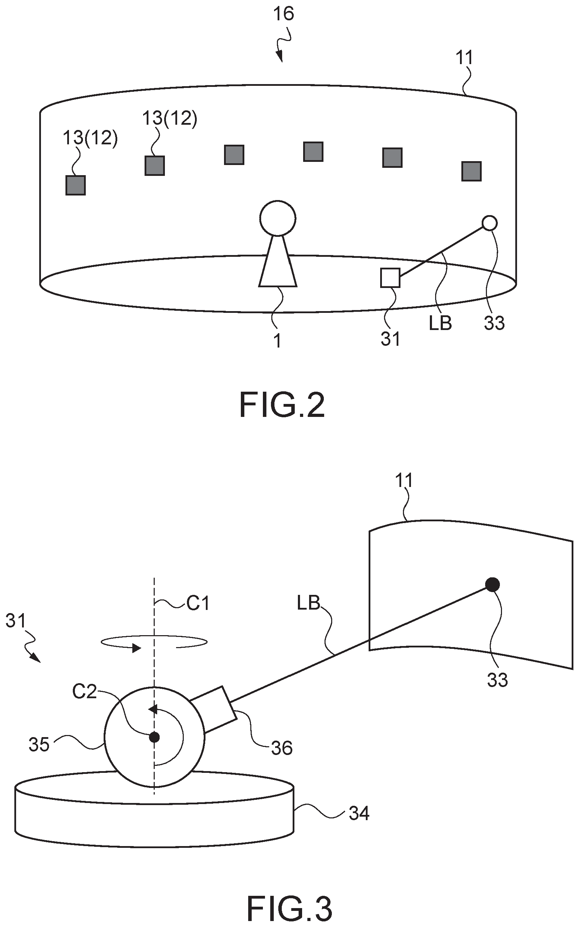

Fig. 2 schematically illustrates an example of a configuration of the image-capturing system 10. In the image-capturing system 10 (an image-capturing studio), the green screen 11 and a plurality of cameras 13 included in the image-capturing section 12 are arranged around an image-capturing space 16 in order to capture an image of the subject 1. For example, a relatively large space is set to be the image-capturing space 16 in order for the subject 1 to move freely.

The green screen 11 is an all-around screen that surrounds all of the periphery of the image-capturing space 16 in which an image of the subject 1 is captured. Thus, the image-capturing studio illustrated in Fig. 2 is an image-capturing studio that has an all-round green background. The use of an all-around screen makes it possible to use the green screen 11 as a background even when, for example, images of the subject 1 are captured from all directions. Further, a shape of the green screen 11 corresponds to a shape of the image-capturing space 16 with no change. Note that it is sufficient if the all-around screen is situated behind and ahead of the subject 1, and the all-around screen does not necessarily have to surround all around the subject 1 covering the complete 360 degrees circumference. For example, the green screen 11 in the form of an all-around screen may include a non-image-capturing region including an entrance to the image-capturing space 16.

In the example illustrated in Fig. 2, the green screen 11 having a cylindrical shape is formed. In this case, a cylindrical sidewall and a floor surface are green. Further, a columnar space surrounded by the green screen 11 corresponds to the image-capturing space 16. Note that, for example, illumination mechanical equipment is arranged properly above the image-capturing space 16 (a ceiling portion). Moreover, the shape of the green screen 11 is not limited, and, for example, the green screen 11 having a rectangular-parallelepiped shape or a polygonal-prism shape may be used.

The plurality of cameras 13 is arranged to surround the image-capturing space 16. In other words, images of the subject 1 are captured using the plurality of cameras 13 arranged to surround the image-capturing space 16. For example, each camera 13 is arranged along the sidewall of the green screen 11 to be oriented toward a center portion of the image-capturing space 16. In the present embodiment, the plurality of cameras 13 (the image-capturing section 12) is an all-around camera that captures images of the subject 1 from all directions. This makes it possible to capture images of the subject 1 from all directions with no blind spot. The plurality of cameras 13 may be embedded in the green screen 11, or may be arranged inside of the green screen 11 using specified fixing devices.

Further, it is assumed that intrinsic and extrinsic parameters for each of the plurality of cameras 13 are known in advance. Examples of the intrinsic parameter include parameters such as a focal position, an image center, and characteristics of a lens of the camera 13. Further, examples of the extrinsic parameter include parameters that indicate, for example, a position (an image-capturing position) and a pose (an image-capturing orientation) of the camera 13. These parameters are recorded in the form of data.

In the present embodiment, a live-action volumetric moving image is captured using an image-capturing studio in which an all-around screen (the green screen 11) and an all-around camera (the plurality of cameras 13) that are illustrated in Fig. 2 are arranged. For example, the live-action volumetric technology is a technology used to create a live-action 3D model 6 of the subject 1 from a captured image of the subject 1. Thus, the live-action volumetric moving image is, for example, a video that enables the 3D model 6 performing the same movement as the subject 1 to be displayed at any viewpoint on any scale.

When a live-action volumetric moving image is captured, the cameras 13 of the plurality of cameras 13 first capture images of the subject 1 from different directions, with the green screen 11 being a background. Next, the image-capturing-side controller 14 extracts the subject image 3 obtained by separating the background from the image captured by each camera 13. Next, the image-capturing-side controller 14 creates three-dimensional data of the subject 1 using data of the subject image 3 to create the 3D model 6 of the subject 1.

Examples of the data of the 3D model 6 include shape data that indicates a three-dimensional shape of the model, bone-structure data for a person model, and texture data that indicates surface information. Further, the examples of the data of the 3D model 6 may include data of a background of the 3D model 6. These pieces of data are transmitted to the viewing-side controller 23 as pieces of content data.

At the viewing-side location, the viewing-side controller 23 generates the content video 5 (a live video) on the basis of the content data. The content video 5 is, for example, a video obtained by rendering the 3D model 6 at any viewpoint on any scale. In the present embodiment, the 3D model 6 is rendered according to the position of the viewpoint P2 of the viewer 2 and an orientation of the line of sight L2 of the viewer 2. This makes it possible to display a video with 6 degrees of freedom (6-DoF). The above-described use of the live-action volumetric technology enables video representation with a high degree of freedom.

[Line-of-Sight Guiding System]

As illustrated in the lower portion in Fig. 1, the line-of-sight guiding system 30 includes an irradiation apparatus 31 and a line-of-sight guiding controller 32. The irradiation apparatus 31 is an apparatus that is used by being arranged in the real space. Specifically, at the image-capturing-side location, the irradiation apparatus 31 is properly arranged at a position at which the irradiation apparatus 31 can project, onto the green screen 11, a spot 33 used to guide the line of sight L1 of the subject 1 to the green screen 11. The line-of-sight guiding controller 32 is, for example, a computer that is provided at the image-capturing-side location. For example, a server apparatus that is provided at a place different from the place of the image-capturing studio may be used as the line-of-sight guiding controller 32.

Fig. 3 schematically illustrates an example of a configuration of the irradiation apparatus 31. The irradiation apparatus 31 is an apparatus that irradiates a laser beam LB to project the spot 33 onto the green screen 11. The irradiation apparatus 31 includes an azimuth rotation section 34, an elevation rotation section 35, and a laser pointer 36, and is a movable laser pointer that controls a pose of the laser pointer 36 using the azimuth rotation section 34 and the elevation rotation section 35.

The azimuth rotation section 34 is a rotational stage provided to a lower portion of the irradiation apparatus 31, and rotates about a rotation axis C1. For example, the azimuth rotation section 34 is arranged such that the rotation axis C1 is parallel to an orthogonal direction. The elevation rotation section 35 is a rotational mechanism mounted on the azimuth rotation section 34, and rotates about a rotation axis C2. For example, the elevation rotation section 35 is arranged on the azimuth rotation section 34 such that the rotation axis C2 is parallel to a horizontal direction. For example, the azimuth rotation section 34 and the elevation rotation section 35 are driven using, for example, a stepping motor.

The laser pointer 36 is a light-emitting element that irradiates the laser beam LB. When the laser beam LB irradiated by the laser pointer 36 impinges an object, the spot 33 corresponding to a bright spot of the laser beam LB is formed at a position, on the object, that the laser beam LB impinges. This makes it possible to project the spot 33 onto the green screen 11. This spot 33 is a sign for a position toward which the line of sight L1 of the subject 1 is to be oriented, and serves as line-of-sight-guidance information for the subject 1. As described above, the irradiation apparatus 31 serves as a presentation apparatus that presents, to the subject 1, a position toward which the line of sight L1 is to be oriented (the line-of-sight-guidance information).

A light-emitting element that uses, for example, a laser diode as a light source is used as the laser pointer 36. Further, a color and an intensity of the laser beam LB are set properly such that the subject 1 can easily perceive the spot 33 when the laser beam LB is irradiated onto the green screen 11. Moreover, a specific configuration of the laser pointer 36 is not limited.

The laser pointer 36 is mounted on the elevation rotation section 35 such that the laser pointer 36 rotates together with the elevation rotation section 35. When, for example, the elevation rotation section 35 is driven, an irradiation direction of irradiation performed by the laser pointer 36 (an irradiation direction of the laser beam LB) is rotated in an elevation direction. This corresponds to angle control performed in a tilt direction to move the position of the spot 33 upward or downward. Further, when the azimuth rotation section 34 is driven, the laser pointer 36 is rotated together with the elevation rotation section 35. As a result, the irradiation direction of irradiation performed by the laser pointer 36 is rotated in an azimuth direction. This corresponds to angle control performed in a pan direction to move the position of the spot 33 rightward or leftward.

As described above, the irradiation apparatus 31 is the laser pointer 36 being capable of rotating in the elevation direction and in the azimuth direction. Accordingly, for example, the irradiation direction of irradiation performed by the laser pointer 36 can be set to be a desired direction by controlling, for example, the rotation angles in the elevation direction and in the azimuth direction, that is, a tilt angle and a pan angle.

Note that, in Fig. 3, the rotation axis C1 of the azimuth rotation section 34 and the rotation axis C2 of the elevation rotation section 35 intersect. As a result, a point of intersection of the rotation axis C1 and the rotation axis C2 is a point that is not moved even when the azimuth rotation section 34 and the elevation rotation section 35 are driven, and, for example, the point of intersection can be used as an origin used when the laser pointer 36 is controlled. Note that the configuration of the irradiation apparatus 31 is not limited thereto, and, for example, the rotation axis C1 and the rotation axis C2 do not necessarily have to intersect. In such a case, the rotation angles in the elevation direction and in the azimuth direction can also be calculated properly and the irradiation direction can be rendered coincident with a desired direction according to a structure of the irradiation apparatus 31.

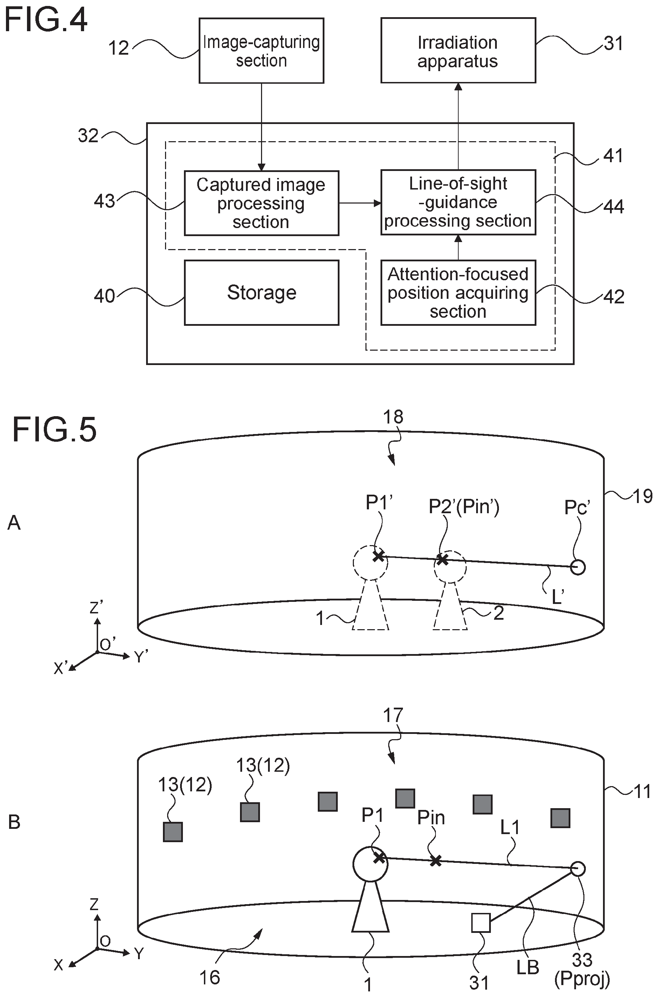

Fig. 4 is a block diagram illustrating an example of a functional configuration of the line-of-sight guiding controller 32. The line-of-sight guiding controller 32 is an apparatus that controls an operation of the irradiation apparatus 31 to guide the line of sight L1 of the subject 1, and is formed using, for example, a personal computer (PC). The line-of-sight guiding controller 32 includes a storage 40 and a control apparatus 41.

The storage 40 is a nonvolatile storage device, and, for example, a solid state drive (SSD) or a hard disk drive (HDD) is used as the storage 40. The storage 40 stores therein a control program. The control program is, for example, a program that controls an overall operation of the line-of-sight guiding controller 32. In the present embodiment, the storage 40 corresponds to a computer-readable recording medium that records therein a program. Further, the control program corresponds to the program recorded in the recording medium.

The control apparatus 41 is a computational apparatus that controls an operation of the line-of-sight guiding controller 32. The control apparatus 41 is configured by hardware, such as a CPU and a memory (a RAM and a ROM), that is necessary for a computer. Various processes are performed by the CPU loading, into the RAM, the control program stored in the storage 40 and executing the program. In the present embodiment, the control apparatus 41 corresponds to an information processing apparatus.

For example, a programmable logic device (PLD) such as a field programmable gate array (FPGA), or another device such as an application specific integrated circuit (ASIC) may be used as the control apparatus 41. Further, for example, a graphics processing unit (GPU) may be used as the control apparatus 41.

In the present embodiment, an attention-focused position acquiring section 42, a captured image processing section 43, and a line-of-sight-guidance processing section 44 are implemented as functional blocks by the CPU of the control apparatus 41 executing a program (the control program) according to the present embodiment. Then, an information processing method according to the present embodiment is performed by these functional blocks. Note that, in order to implement each functional block, dedicated hardware such as an integrated circuit (IC) may be used as appropriate.

The attention-focused position acquiring section 42 acquires an attention-focused position Pin that the subject 1 is desired to look at. For example, the attention-focused position Pin is a position to which the line of sight L1 of the subject 1 is to be guided, that is, a position to which a line of sight of the subject 1 is desired to be guided. Note that the attention-focused position Pin is a position to which the line of sight L1 of the subject 1 is guided by the subject 1 looking at the spot 33 projected by the irradiation apparatus 31, and is a position that is different from a position of a projection point onto which the spot 33 is projected.

In the present embodiment, the attention-focused position Pin is a viewpoint position of the viewer 2 viewing the display apparatus 21 provided at the viewing-side location. The viewpoint position of the viewer 2 is, for example, a position of the viewpoint P2 of the viewer 2 that is detected by the viewpoint sensor 22 and viewing-side controller 23 described with reference to Fig. 1. The viewpoint position of the viewer 2 may be hereinafter referred to as a viewpoint position P2, using the same reference numeral as the viewpoint P2 of the viewer 2. For example, the viewpoint position P2 of the viewer 2 is detected as a coordinate position in a real space set at the viewing-side location. In this case, the attention-focused position acquiring section 42 reads coordinate information regarding coordinates of the viewpoint position P2 of the viewer 2 through a specified network. Note that the attention-focused position acquiring section 42 may read a result of detection performed by the viewpoint sensor 22 to detect the viewpoint position P2 of the viewer 2.

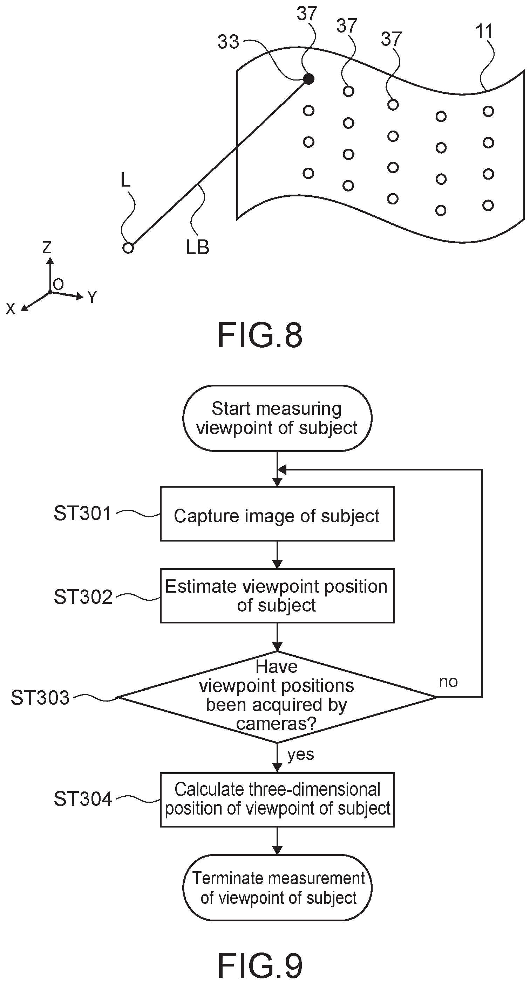

The captured image processing section 43 performs processing on images captured by the image-capturing section 12 (the plurality of cameras 13) provided at the image-capturing-side location to acquire information used to guide the line of sight L1 of the subject 1. Specifically, the captured image processing section 43 acquires the viewpoint position of the subject 1 on the basis of images of the subject 1 that are captured by the plurality of cameras 13 provided in a real space such that the green screen 11 is a background in an image-capturing-range. The viewpoint position of the subject 1 is a position of a viewpoint P1 of the subject 1. The viewpoint position of the subject 1 may be hereinafter referred to as a viewpoint position P1, using the same reference numeral as the viewpoint P1 of the subject 1. For example, the viewpoint position P1 of the subject 1 is detected as a coordinate position in a real space set at the image-capturing-side location. A method for calculating the viewpoint position P1 of the subject 1 will be described later with reference to, for example, Fig. 9.

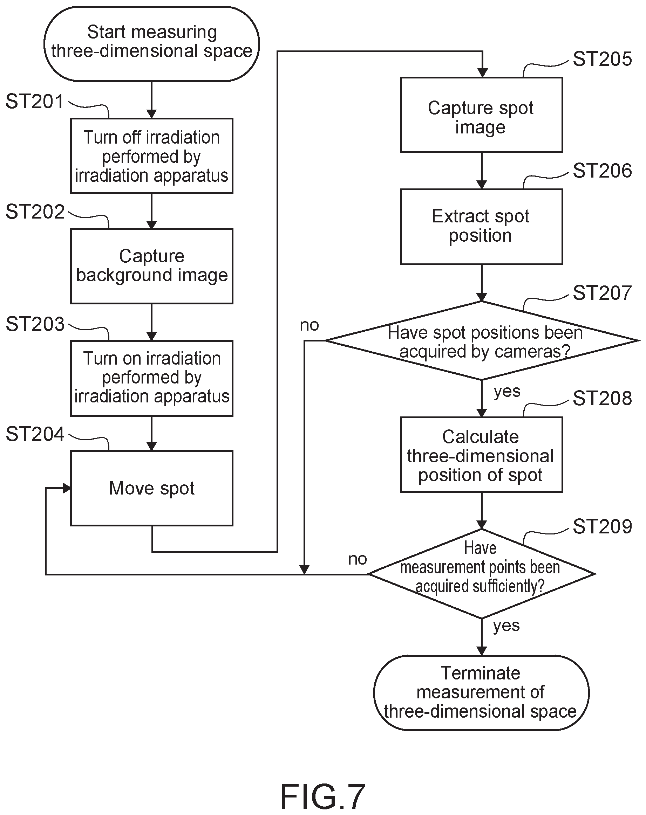

Further, the captured image processing section 43 acquires virtual-space information that indicates a position of the green screen 11 in a virtual three-dimensional space, on the basis of images captured by the plurality of cameras 13. Here, the virtual three-dimensional space is a three-dimensional space created by, for example, a computer. For example, the virtual-space information is data obtained by mapping the position of the green screen 11 and reproducing the green screen 11 in the virtual three-dimensional space. The form of the virtual-space information is not limited, and the virtual-space information may be, for example, group-of-points data representing respective points on the green screen 11 or polygon data making up a screen surface. A method for generating the virtual-space information will be described later with reference to, for example, Figs. 7 and 8.

As described above, in the line-of-sight guiding controller 32, the attention-focused position acquiring section 42 acquires the attention-focused position Pin (here, the viewpoint position P2 of the viewer 2) that the subject 1 is desired to look at, and the captured image processing section 43 acquires the viewpoint position P1 of the subject 1 and virtual-space information. In the present embodiment, an acquisition section that acquires a viewpoint position of a subject of which an image is captured using a screen for chroma-key compositing that is provided in a real space, an attention-focused position that the subject is desired to look at, and virtual-space information that indicates a position of the screen in a virtual three-dimensional space, is implemented by the attention-focused position acquiring section 42 and the captured image processing section 43.

The line-of-sight-guidance processing section 44 calculates a projection point Pproj of the spot 33 projected by the irradiation apparatus 31, using the attention-focused position Pin (the viewpoint position P2 of the viewer 2) acquired by the attention-focused position acquiring section 42 and the viewpoint position P1 of the subject 1 that is acquired by the captured image processing section 43. Here, the projection point Pproj is a guidance point to which the line of sight L1 of the subject 1 is actually guided at the image-capturing-side location. A position of the projection point Pproj may be hereinafter referred to as a projection position Pproj. The virtual-space information (data obtained by reproducing the green screen 11 in the virtual three-dimensional space) acquired by the captured image processing section 43 is used for a process of calculating the projection point Pproj.

Fig. 5 is a schematic diagram used to describe a basic operation of the line-of-sight guiding system 30. A of Fig. 5 schematically illustrates a virtual three-dimensional space 18, and B of Fig. 5 schematically illustrates a real space 17 that corresponds to the image-capturing-side location. The virtual three-dimensional space 18 is hereinafter simply referred to as a virtual space 18.

A position of the real space 17 is represented by three-dimensional coordinates set for the real world. Respective axes for Cartesian coordinates that represent a three-dimensional position of the real space 17 are referred to as an X axis, a Y axis, and a Z axis, and an origin of an XYZ coordinate system is represented by O. The X axis and the Y axis are, for example, axes orthogonal to each other in a horizontal plane, and the Z axis is an axis that represents an orthogonal direction orthogonal to the horizontal plane.

Further, a position of the virtual space 18 is represented by virtually set three-dimensional coordinates. Respective axes for Cartesian coordinates that represent a three-dimensional position of the virtual space 18 are referred to as an X' axis, a Y' axis, and a Z' axis, and an origin of an X'Y'Z' coordinate system is represented by O'. The X' axis and the Y' axis are, for example, axes orthogonal to each other in a horizontal plane in the virtual space 18, and the Z' axis is an axis that represents an orthogonal direction orthogonal to the horizontal plane in the virtual space 18.

A set of coordinates represented using the XYZ coordinate system for the real space 17 and a set of coordinates represented using the X'Y'Z' coordinate system for the virtual space 18 correspond to each other one-to-one, and can be transformed into each other. For example, coordinates of the viewpoint position P1 of the subject 1 in B of Fig. 5 are represented using the XYZ coordinate system set for the real space 17 at the image-capturing-side location. A viewpoint position P1' in A of Fig. 5 is a position obtained by transforming the viewpoint position P1 in the real space 17 into the virtual space 18. Coordinates of the viewpoint position P1' are represented using the X'Y'Z' coordinate system set for the virtual space 18.

On the other hand, the viewpoint position P2 of the viewer 2 is represented using an XYZ coordinate system set for the real space 17 at the viewing-side location. The XYZ coordinate system at the viewing-side location is set independently of the XYZ coordinate system (the coordinate system illustrated in B of Fig. 5) at the image-capturing-side location. However, the viewpoint position P2 can also be uniquely transformed into a position in the virtual space 18. A viewpoint position P2' in A of Fig. 5 is a position obtained by transforming the viewpoint position P2 of the viewer 2 in the real space 17 into the virtual space 18. Coordinates of the viewpoint position P2' are represented using the X'Y'Z' coordinate system set for the virtual space 18, as in the case of the viewpoint position P1'. In the present embodiment, the viewpoint position P2' corresponds to an attention-focused position Pin' in the virtual space 18.

Further, a virtual green screen 11 (hereinafter referred to as a virtual screen 19) generated as virtual-space information is arranged in the virtual space 18. The virtual screen 19 is obtained by reproducing, in the virtual space 18, the green screen 11 in the real space 17, and a position of each point on the virtual screen 19 is represented using the X'Y'Z' coordinate system.

As described above, in the virtual space 18, the viewpoint position P1 of the subject 1 and the position of the green screen 11 at the image-capturing-side location are reproduced into the viewpoint position P1' and the position of the virtual screen 19. Further, in virtual space 18, the viewpoint position P2 of the viewer 2 at the viewing-side location is reproduced into the viewpoint position P2'. The above-described use of the virtual space 18 makes it possible to virtually arrange the subject 1, the viewer 2, and the green screen 11 in the same space.

Note that a method for setting the X'Y'Z' coordinate system is not limited. For example, the setting may be performed such that the X'Y'Z' coordinate system for the virtual space 18 and the XYZ coordinate system for the real space 17 at the image-capturing-side location coincide. In this case, the origin O' is set to have coordinate values equal to coordinate values of the origin O, and the X' axis, the Y' axis, and the Z' axis are respectively set in directions respectively identical to directions of the X axis, the Y axis, and the Z axis. This makes it possible to use coordinates in the virtual space 18 as coordinates in the real space 17 with no change. Further, for example, a space in which the 3D model 6 of the subject 1 is rendered may be used as the virtual space 18, or the virtual space 18 may be set to be a space independent of the space in which the 3D model 6 is rendered. Moreover, the coordinate system for the virtual space 18 can be set discretionarily.

In the present embodiment, the line-of-sight-guidance processing section 44 determines a virtual point of intersection Pc' of a virtual line L' and the green screen 11 (the virtual screen 19) indicated by virtual-space information, the virtual line L' connecting the viewpoint position P1' of the subject 1 and an attention-focused position Pin' (the viewpoint position P2' of the viewer 2) in the virtual space 18. This is a process of calculating positional coordinates of the virtual point of intersection Pc' in the virtual space 18.

As illustrated in A of Fig. 5, the virtual line L' is a straight line that passes through P1' and P2'. In this case, the virtual line L' is a line in which the subject 1 and the viewer 2 make eye contact with each other in the virtual space 18, and can be a virtual eye-contact line. The virtual point of intersection Pc' is a point in such a virtual line L'. Further, the virtual point of intersection Pc' is a point on the virtual screen 19. Thus, a point, in the real space 17, that corresponds to the virtual point of intersection Pc' (a point obtained by transforming the virtual point of intersection Pc' into the real space 17) is a point on the green screen 11, and is a point onto which the spot 33 can be projected.

For example, it is assumed that, in the real space 17, the subject 1 is looking at a point that corresponds to the virtual point of intersection Pc'. This state is a state in which the subject 1 is looking at the viewpoint P2 of the viewer 2 in the content video 5 displayed at the viewing-side location. In other words, when the subject 1 looks at the virtual point of intersection Pc' transformed into a point in the real space 17, this makes it possible to render the line of sight of the subject 1 and the line of sight of the viewer 2 coincident at the viewing-side location.

Thus, a point, in the real space 17, that corresponds to the virtual point of intersection Pc' is set to be a guidance point to which the line of sight L1 of the subject 1 is guided, that is, the projection point Pproj onto which the spot 33 is projected by the irradiation apparatus 31. A position of the projection point Pproj is calculated by transforming positional coordinates of the virtual point of intersection Pc' into positional coordinates in the real space 17. As described above, the projection point Pproj can be a point obtained by performing coordinate transformation on the attention-focused position Pin (the viewpoint position P2 of the viewer 2) that the subject 1 is normally desired to look at, the coordinate transformation being performed according to the shape of a portion of the green screen 11 around the subject 1.

Further, the line-of-sight-guidance processing section 44 controls the irradiation direction of irradiation performed by the irradiation apparatus 31 provided in the real space 17, such that the projection point Pproj (the guidance point) being situated on the green screen 11 and corresponding to the virtual point of intersection Pc' in the real space 17 is pointed. As a result, the irradiation apparatus 31 irradiates the laser beam LB toward the projection point Pproj, and the spot 33 is projected onto the projection point Pproj. When, for example, the subject 1 moves his/her line of sight L1 to look at the spot 33, this makes it possible to display, at the viewing-side location, the content video 5 with which the line of sight of the subject 1 and the line of sight of the viewer 2 are rendered coincident. In the present embodiment, the line-of-sight-guidance processing section 44 serves as a determination section and a control section.

As described above, the green screen 11 is an all-around screen. Thus, for example, there exists a screen not only in a region that corresponds to a background when an image of the subject 1 is captured from the front, but also in a region in front, as viewed from the subject 1. The region in front, as viewed from the subject 1, is, for example, a region that the subject 1 can view when the subject 1 is looking at the front.

In the present embodiment, the spot 33 is projected onto a portion of the screen that is situated ahead of the subject 1. In other words, the line-of-sight-guidance processing section 44 controls the irradiation direction of irradiation performed by the irradiation apparatus 31, such that the projection point Pproj (the guidance point) in a region on the green screen 11, which is an all-around screen, is pointed, the region being situated in front, as viewed from the subject 1. This enables the subject 1 to easily find the projection point Pproj. This makes it possible to naturally render the line of sight of the subject 1 and the line of sight of the viewer 2 coincident without the subject 1 moving unnaturally.

For example, an anterior direction and a posterior direction that correspond to directions in the real space 17 at the viewing-side location are set in advance in the real space 17 (the image-capturing space 16 surrounded by the green screen 11) at the image-capturing-side location. In this case, the anterior direction in the image-capturing space 16 corresponds to, for example, a front direction at the viewing-side location, as viewed from the display apparatus 21. In such a positional relationship, the subject 1 gives performance considering that the viewer 2 is situated in the anterior direction in the image-capturing space 16, and faces in the anterior direction in the image-capturing space 16 in most cases. Further, the viewpoint position P2' of the viewer 2 in the virtual space 18 is arranged in front, as viewed from the subject 1. As a result, the projection point Pproj is a point in a region on the green screen 11, the region being situated in front, as viewed from the subject 1, and the spot 33 is projected onto the region in front, as viewed from the subject 1.

Note that the viewer 2 can move freely at the viewing-side location. Thus, it is conceivable that, depending on the positional relationship between the subject 1 and the viewer 2, the viewpoint position P2' of the viewer 2 in the virtual space 18 could be situated in back, as viewed from the subject 1. In this case, a point, in the image-capturing space 16, that corresponds to the virtual point of intersection Pc' is a point in a region on the green screen 11, the region being situated in back, as viewed from the subject 1. In such a case, the projection point Pproj may be controlled such that the line of sight of the subject 1 is guided to the point corresponding to the virtual point of intersection Pc'. For example, independently of the virtual point of intersection Pc', the projection point Pproj may be set in a region in front, as viewed from the subject 1, and the projection point Pproj may be moved such that the projection point Pproj finally coincides with the point corresponding to the virtual point of intersection Pc'. This makes it possible to naturally guide the line of sight of the subject 1 such that the line of sight of the subject 1 coincides with the viewer 2.

In the example described above, the positional relationship in the real space 17 between the image-capturing-side location and the viewing-side location is fixed in advance. Without being limited thereto, the positional relationship in the real space 17 may be adjusted in the virtual space 18 such that the projection point Pproj corresponding to the virtual point of intersection Pc' is the point in the region in front, as viewed from the subject 1. In this case, a process of rotating or translating at least one of the coordinate system at the image-capturing-side location or the coordinate system at the viewing-side location is performed such that, for example, in the virtual space 18, the viewpoint position P2' of the viewer 2 is arranged in front, as viewed from the subject 1. This enables the subject 1 to give performance with a high degree of freedom.

As described above, in the line-of-sight guiding system 30, coordinate transformation is performed on the viewpoint position P2 of the viewer 2, which is the attention-focused position Pin, to obtain the projection point Pproj, in order to guide the line of sight of the subject 1 upon image-capturing performed with an all-round green background using the green screen 11. This coordinate transformation is performed in the virtual space 18 using the viewpoint position P2 of the viewer 2, the viewpoint position P1 of the subject 1, and the shape of the green screen 11 (virtual-space information). When the irradiation apparatus 31 presents the spot 33 onto the projection point Pproj calculated as described above, this makes it possible to guide the line of sight L1 of the subject 1 such that the subject 1 looks at any three-dimensional coordinates when, for example, a live-action volumetric moving image is being captured.

Further, for example, the spot 33, which is a bright spot of the laser beam LB, has a diameter of a few centimeters or less, or typically a diameter of one centimeter or less. Thus, even when the spot 33 appears in an image of the subject 1, there is hardly a reduction in the performance in extracting the subject image 3. This makes it possible to guide the line of sight of the subject 1 without reducing the performance in extracting the subject image 3.

[Operation of Line-of-Sight Guiding System]

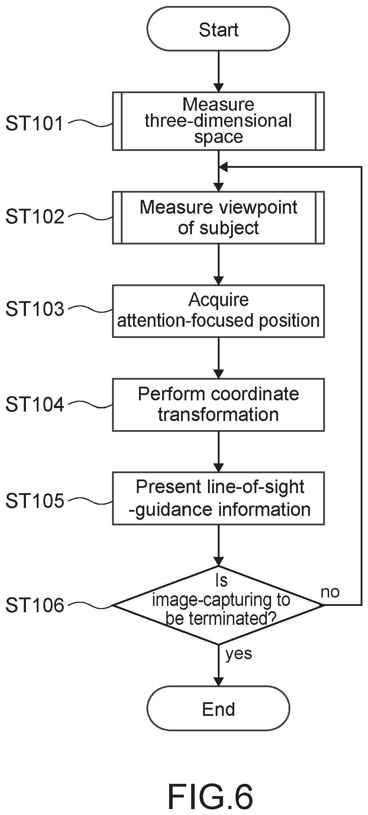

Fig. 6 is a flowchart of an example of an operation of the line-of-sight guiding system 30. Processing illustrated in Fig. 6 is processing started together with start of the line-of-sight guiding system 30. First, a three-dimensional-space measuring process of measuring the image-capturing space 16 is performed at the image-capturing-side location (Step 101). The measurement of a three-dimensional space is, for example, a process performed before an image of the subject 1 is captured. Here, the captured image processing section 43 generates virtual-space information indicating the position of the green screen 11 in the virtual space 18 on the basis of images captured by a plurality of cameras 13. Note that, when the three-dimensional-space measuring process is performed in advance and when the virtual-space information regarding the green screen 11 is recorded in, for example, the storage 40, the virtual-space information is read properly.

Next, a subject viewpoint measuring process of measuring the viewpoint position P1 of the subject 1 is performed at the image-capturing-side location (Step 102). Here, the captured image processing section 43 calculates positional coordinates of the viewpoint position P1 of the subject 1 in the real space 17 on the basis of the images captured by the plurality of cameras 13.

Next, an attention-focused position acquiring process of acquiring positional coordinates of an attention-focused position Pin is performed (Step 103). In the present embodiment, the viewpoint position P2 of the viewer 2, which is measured at the viewing-side location, is acquired as the attention-focused position Pin. Here, the attention-focused position acquiring section 42 reads, from the viewing-side controller 23, positional coordinates of the viewpoint position P2 of the viewer 2 in the real space 17.

Next, a coordinate transformation process of transforming the attention-focused position Pin (the viewpoint position P2 of the viewer 2) into a projection point Pproj is performed (Step 104). Here, the line-of-sight-guidance processing section 44 transforms the viewpoint position P2 of the viewer 2 into the projection point Pproj on the basis of the viewpoint position P1 of the subject 1 and the virtual-space information regarding the green screen 11, the viewpoint position P2 of the viewer 2 being measured at the viewing-side location, the projection point Pproj being a point in the real space 17 at the image-capturing-side location.

Next, a line-of-sight-guidance-information presenting process including controlling the irradiation apparatus 31 and projecting, onto the projection point Pproj, the spot 33 corresponding to line-of-sight-guidance information (Step 105). This process is a process of presenting, to the subject 1 of which an image is being captured, a sign (the spot 33) toward which the line of sight L1 is to be oriented. Here, the line-of-sight-guidance processing section 44 calculates an irradiation direction in which the projection point Pproj can be irradiated with the laser beam LB. The irradiation apparatus 31 is controlled to be oriented toward the irradiation direction, and the spot 33 is projected onto the projection point Pproj.

When the spot 33 is projected, it is determined whether to terminate image-capturing on the subject 1 (Step 106). For example, when image-capturing on the subject 1 is continuously performed (no in Step 106), the processes of and after Step 102 are performed again. Further, when the image-capturing is terminated since, for example, the performance of the subject 1 ends (yes in Step 106), the operation of the line-of-sight guiding system 30 is terminated. Details of the operation performed in each of Steps described with reference to Fig. 6 are specifically described below.

[Three-Dimensional-Space Measuring Process]

Here, a specific method of the three-dimensional-space measuring process performed in Step 101 of Fig. 6 is described. As described above, there is a need to acquire three-dimensional position information regarding the green screen 11 in order to properly present the spot 33 (the line-of-sight-guidance information) in conformity to the viewpoint position P1 of the subject 1. In the present embodiment, the three-dimensional-space measuring process using the plurality of cameras 13 and the irradiation apparatus 31 is performed, the plurality of cameras 13 also being used to capture a live-action volumetric moving image and installed to surround the image-capturing space 16.

Fig. 7 is a flowchart of an example of the three-dimensional-space measuring process. Fig. 8 is a schematic diagram used to describe the example of the three-dimensional-space measuring process. In the three-dimensional-space measuring process, positions of a plurality of measurement points 37 on the green screen 11 are measured as positional coordinates in the real space 17. Virtual-space information indicates the positions of the plurality of measurement points 37 in the virtual space 18. In the following description, it is assumed that intrinsic parameters and extrinsic parameters for the plurality of cameras 13 are calibrated in advance and that values of the respective parameters can be referred to in the form of data.

First, irradiation of the laser beam LB that is performed by the irradiation apparatus 31 is turned off (Step 201), and images are captured by all of the plurality of cameras 13 (Step 202). Here, the captured image is used as a background image in which the spot 33 does not appear. Next, the irradiation of the laser beam LB that is performed by the irradiation apparatus 31 is turned on (Step 203), and the irradiation apparatus 31 is controlled to move the spot 33 (Step 204).

Fig. 8 schematically illustrates the plurality of measurement points 37 of which the positions are measured on the green screen 11. Here, the position of the irradiation apparatus 31 in the real space 17 is referred to as a position L. The measurement point 37 is a point onto which the spot 33 is projected by the irradiation apparatus 31. For example, an operation to micro-drive the irradiation apparatus 31 in the elevation direction and in the azimuth direction is performed repeatedly to form the plurality of measurement points 37. In the three-dimensional-space measuring process, the spot 33 is projected onto the measurement points 37 of the plurality of measurement points 37 in sequence, and positional coordinates in the real space 17 are calculated for each measurement point 37.

When the spot 33 is moved, spot images of the spot 33 are captured by the plurality of cameras 13 (Step 205). For example, the spot image is an image captured by the camera 13 of which an angle of view includes a projection position of the spot 33. When the spot image is captured, a spot position is extracted (Step 206). Here, the spot position in an image is calculated from a difference between a spot image and a background image captured by the camera 13 capturing the spot image.

Next, it is determined whether spot positions have been acquired by the cameras 13 of the plurality of cameras 13 (Step 207). It is necessary that the spot positions be acquired by at least two cameras 13. Here, it is determined whether the number of the cameras 13 having acquired the spot positions successfully exceeds a threshold that is greater than or equal to two. When the number of the cameras 13 does not exceed the threshold (no in Step 207), the process returns to Step 204, and the spot 33 is moved to the next measurement point 37. Further, when the number of the cameras 13 exceeds the threshold (yes in Step 207), a three-dimensional position of the spot 33 is calculated (Step 208).

The three-dimensional position of the spot 33 is calculated by triangulation using, for example, spot positions (planar positions of the spot 33 in the images) acquired by the cameras 13 of the plurality of cameras 13, and an intrinsic parameter and an extrinsic parameter for each of the cameras 13. The three-dimensional position of the spot 33 that is calculated here is stored as three-dimensional coordinates of one measurement point 37.

When the three-dimensional position of the spot 33 is calculated, it is determined whether the measurement points 37 have been acquired sufficiently (Step 209). For example, it is determined, using a threshold, whether the measurement point 37 has been acquired with a sufficient density or whether a sufficient number of the measurement points 37 has been acquired. When it has been determined that the measurement points 37 have not been acquired sufficiently (no in Step 209), the process returns to Step 204, and the irradiation apparatus 31 is driven to move the spot 33 by a very small distance. Then, the process of measuring the position of the next measurement point 37 continues to be performed. This makes it possible to measure a shape of a surface of the green screen 11. Note that, when it has been determined that the measurement points 37 have been acquired sufficiently (yes in Step 209), the three-dimensional-space measuring process is terminated.

In the present embodiment, images of the spot 33 projected onto the green screen 11 by the irradiation apparatus 31 are captured by a plurality of cameras 13, and three-dimensional coordinates of the spot 33 are calculated on the basis of the images captured by the plurality of cameras 13, as described above. This makes it possible to acquire data that represents a three-dimensional position of the green screen 11 without using, for example, a dedicated sensor used to measure a shape of the green screen 11. This makes it possible to provide virtual-space information at lower costs, compared to when, for example, a dedicated sensor is used.

[Subject Viewpoint Measuring Process]

Here, a specific method of the subject viewpoint measuring process performed in Step 102 of Fig. 6 is described. There is a need to acquire the viewpoint position P1 of the subject 1 properly in order to control the irradiation apparatus 31 to present the spot 33 (line-of-sight-guidance information) to the subject 1 properly. In the present embodiment, the subject viewpoint measuring process is performed using a plurality of cameras 13 and the irradiation apparatus 31, as in the case of the three-dimensional-space measuring process.

Fig. 9 is a flowchart of an example of the subject viewpoint measuring process. In the subject viewpoint measuring process, the viewpoint position P1 of the subject 1 is measured as positional coordinates in the real space 17. First, images of the subject 1 are captured by the plurality of cameras 13 (Step 301). Next, a viewpoint position of the subject 1 is estimated in an image that is from among the images captured by the plurality of cameras 13 and in which the subject 1 appears (Step 302). Here, the estimated viewpoint position is a planar position of the viewpoint P1 of the subject 1 in the image. A method for, for example, estimating a pose of a person or detecting a face of the person may be used as a method for estimating a viewpoint position in an image.

Next, it is determined whether viewpoint positions of the subject 1 in images have been acquired by the cameras 13 of the plurality of cameras 13 (Step 303). It is necessary that the viewpoint positions in the images be acquired by at least two cameras 13. Here, it is determined whether the number of the cameras 13 having acquired the viewpoint positions in the images successfully exceeds a threshold that is greater than or equal to two. When the number of the cameras 13 does not exceed the threshold (no in Step 303), the process returns to Step 301, and the image-capturing is performed by the plurality of cameras 13 again. Further, when the number of the cameras 13 exceeds the threshold (yes in Step 303), a three-dimensional position of the viewpoint P1 of the subject 1 (the viewpoint position P1) is calculated (Step 304).

The viewpoint position P1 of the subject 1 is calculated, as in Step 208 of Fig. 7. In other words, the viewpoint position P1 is calculated by triangulation using, for example, viewpoint positions, in the images, that are acquired by the cameras 13 of the plurality of cameras 13, and an intrinsic parameter and an extrinsic parameter for each of the cameras 13. When the viewpoint position P1 of the subject 1 is calculated, the subject viewpoint measuring process is terminated.

[Coordinate Transformation Process]

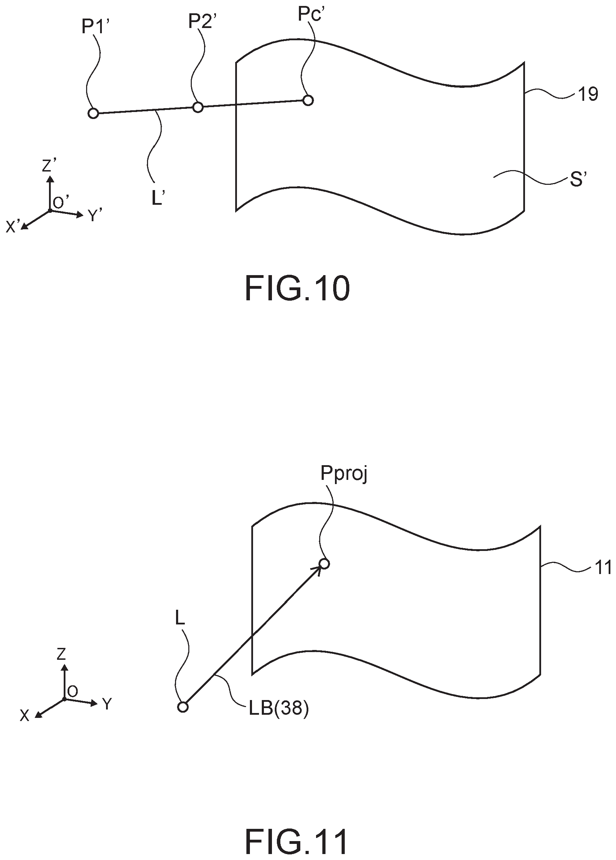

Fig. 10 is a schematic diagram used to describe an example of the coordinate transformation process. Here, a specific method of the coordinate transformation process performed in Step 104 of Fig. 6 is described. Fig. 10 schematically illustrates an arrangement relationship among the viewpoint position P1' of the subject 1, the attention-focused position Pin' (the viewpoint position P2' of the viewer 2), and the virtual screen 19 in the virtual space 18. Here, a surface that forms the virtual screen 19 is referred to as a formation surface S'.

The viewpoint position P1' of the subject 1 is obtained by transforming coordinates of the viewpoint position P1 of the subject 1 in the real space 17 into coordinates in the virtual space 18. The attention-focused position Pin' (the viewpoint position P2' of the viewer 2) is obtained by transforming coordinates of the attention-focused position Pin (the viewpoint position P2 of the viewer 2) in the real space 17 into coordinates in the virtual space 18. The virtual screen 19 corresponds to data (virtual-space information) obtained by transforming, into coordinates in the virtual space 18, data of a shape of the green screen 11 that is obtained by the three-dimensional-space measuring process.

Here, the virtual point of intersection Pc' of the virtual line L' and the virtual screen 19 is calculated, the virtual line L' connecting the viewpoint position P1' of the subject 1 and the attention-focused position Pin'. Formula satisfied by the virtual point of intersection Pc' is represented as indicated below.

$$\text{Pc'}=(1-t)\text{P1'}+t\text{Pin'} \quad ... \quad (1)$$

Here, the virtual point of intersection Pc' is a point on the formation surface S' of the virtual screen 19. Further, t is a positive real number ($t \geq 0$). For example, the right side of Formula (1) represents a position of a tip of a vector (a line-of-sight vector) that extends in parallel with the virtual line L' and of which a start point is the viewpoint position P1' of the subject 1. Furthermore, t is a parameter that represents a length of the line-of-sight vector (a distance from the viewpoint position P1').

The coordinate transformation process is, for example, a process including obtaining t, which satisfies Formula (1), and calculating coordinates of the virtual point of intersection Pc'. For example, t may be changed to determine coordinates (Pc') that satisfy Formula (1). Further, when, for example, the formation surface S' of the virtual screen 19 is a parametrically represented surface, t, which satisfies Formula (1), may be calculated analytically. Moreover, the method for calculating the virtual point of intersection Pc' is not limited, and, for example, a method for calculating a point of intersection according to, for example, a data format of virtual-space information that indicates the formation surface S' may be used properly.

The virtual point of intersection Pc' is transformed into the real space 17 to calculate the projection point Pproj. Specifically, positional coordinates of the virtual point of intersection Pc' in the virtual space 18 (positional coordinates in the X'Y'Z' coordinate system) are transformed into positional coordinates in the real space 17 (positional coordinates in the XYZ coordinate system). The positional coordinates obtained by the transformation are positional coordinates of the projection point Pproj.

[Line-of-Sight-Guidance-Information Presenting Process]

Fig. 11 is a schematic diagram used to describe an example of a pointing operation of the irradiation apparatus. Here, a specific method of the line-of-sight-guidance-information presenting process performed in Step 105 of Fig. 6 is described. Fig. 11 schematically illustrates an arrangement relationship between the position L of the irradiation apparatus 31 in the real space 17 at the image-capturing-side location, and the projection point Pproj on the green screen 11.

As described above, the line-of-sight-guidance-information presenting process is a process of controlling the irradiation apparatus 31 such that the spot 33 is projected onto the projection point Pproj. In the present embodiment, the irradiation direction of irradiation performed by the irradiation apparatus 31 is calculated on the basis of the position L of the irradiation apparatus 31 and the position of the projection point Pproj (a guidance point) in the real space 17. In other words, the irradiation direction in which the spot 33 can be projected onto the projection point Pproj from the position L of the irradiation apparatus 31 is calculated. Further, a line connecting the position L of the irradiation apparatus 31 and the projection point Pproj corresponds to an irradiation path 38 of the laser beam LB.

Specifically, a rotation angle (pan) of the irradiation apparatus 31 in the azimuth direction and a rotation angle (tilt) of the irradiation apparatus 31 in the elevation direction are respectively calculated as parameters used to control the irradiation direction of irradiation performed by the irradiation apparatus 31. Further, these rotation angles are rotation angles from a reference irradiation direction Dir used as a reference of the irradiation direction. Thus, the reference irradiation direction Dir can be an initial direction when the angle pan = 0 and the angle tilt = 0. It is assumed that the position L of the irradiation apparatus 31 and an orientation of the reference irradiation direction Dir are known in advance. The rotation angle (pan) in the azimuth direction and the rotation angle (tilt) in the elevation direction are calculated in accordance with Formula indicated below.

$$\text{L}+t \cdot \text{Rpan} \cdot \text{Rtilt} \cdot \text{Dir}=\text{Pproj} \quad ... \quad (2)$$

Here, Rpan is a rotation matrix used to rotate any three-dimensional vector through the angle pan in the azimuth direction. Further, Rtilt is a rotation matrix used to rotate any three-dimensional vector through the angle tilt in the elevation direction. t is a positive real number ($t \geq 0$). Formula (2) is simultaneous equations used to calculate the angle pan, the angle tilt, and t such that a tip of a vector that extends from the position L of the irradiation apparatus 31 coincides with Proj.

In the present embodiment, the rotation angles (pan and tilt) of the irradiation direction with respect to the reference irradiation direction Dir serving as a reference of the irradiation direction in the irradiation apparatus 31 are calculated, as described above. The calculated rotation angles pan and tilt are transmitted to the irradiation apparatus 31 as control angles. In the irradiation apparatus 31, the azimuth rotation section 34 is driven such that an angle position coincides with a position of the rotation angle pan. Likewise, the elevation rotation section 35 is driven such that the angle position coincides with a position of the rotation angle tilt. As a result, the irradiation direction of the laser beam LB is oriented toward the projection point Pproj, and this makes it possible to project the spot 33 onto the projection point Pproj.

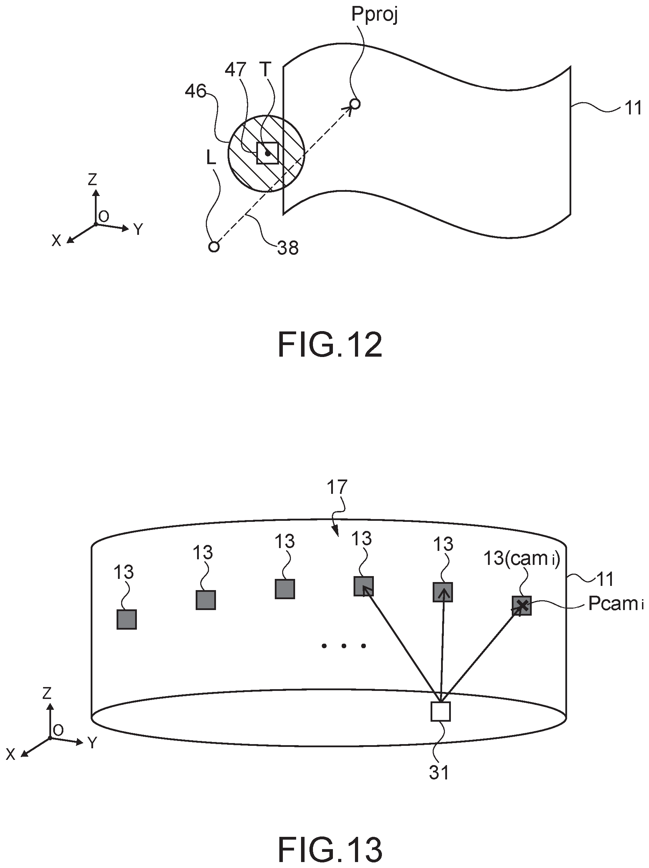

Fig. 12 is a schematic diagram used to describe another example of the pointing operation of the irradiation apparatus 31. Here, a control example of controlling lighting of the irradiation apparatus 31 (the laser pointer 36) to not displaying the spot 33 on a target onto which the spot 33 is not desired to be projected, is described.

When, for example, the laser beam LB is irradiated directly onto an image-capturing apparatus such as the camera 13, the spot 33 of the laser beam LB appears in a captured image. Further, it is dangerous to irradiate the spot 33 onto people including the subject 1 in the image-capturing space 16, although a degree of intensity of the laser beam LB is sufficiently decreased. In the image-capturing space 16, there is a target onto which irradiation of the laser beam LB is desired to be prevented, as described above.

In such a case, measures to prevent irradiation in advance can be taken by referring to the irradiation path 38 (an irradiation direction) of the laser beam LB that is described with reference to Fig. 13. Specifically, the line-of-sight-guidance processing section 44 determines whether the irradiation path 38 connecting the position L of the irradiation apparatus 31 and the projection point Pproj (a guidance point) in the real space 17 passes through a non-irradiation region 46 in which pointing to the projection point Pproj is to be avoided. Further, when it has been determined that the irradiation path 38 passes through the non-irradiation region 46, pointing to the projection point Pproj is stopped.

Here, the non-irradiation region 46 in which pointing to the projection point Pproj is to be avoided is a region in which there is a target (a non-irradiation target 47) onto which irradiation of the laser beam LB is desired to be prevented, where examples of the target include an image-capturing apparatus such as the camera 13 and a person in the image-capturing space 16. Further, a region situated at a certain distance from a position of the non-irradiation target 47 may be set to be the non-irradiation region 46.

In the example illustrated in Fig. 12, a rectangular object is schematically illustrated as an example of the non-irradiation target 47. For example, a position of a stationary object in the real space 17 is assumed to be T, where the non-irradiation target 47 is the stationary object. Further, a region (a hatched region in the figure) situated at a specified distance from the position T of the non-irradiation target 47 is set to be the non-irradiation region 46. Note that the non-irradiation region 46 is typically set to be a region in which the entirety of the non-irradiation target 47 is situated.

When the projection point Pproj is calculated, it is determined whether the irradiation path 38 passes through the non-irradiation region 46. For example, a distance from the position T of the non-irradiation target 47 to the irradiation path 38 is calculated using the position of the projection point Pproj and the position L of the irradiation apparatus 31. When the distance is smaller than a specified distance used to define the non-irradiation region 46, it is determined that the irradiation path 38 passes through the non-irradiation region 46. In this case, the laser pointer 36 is turned off and pointing to the projection point Pproj is stopped since there is a possibility that the laser beam LB will be irradiated onto the non-irradiation target 47.

As described above, when a distance between the non-irradiation target 47 and the irradiation path 38 is a distance with which the non-irradiation target 47 is likely to be irradiated with the laser beam LB, irradiation of the laser beam LB onto the non-irradiation target 47 can be avoided by turning off the laser pointer 36 temporarily.

Note that the case in which the non-irradiation target 47 is a stationary object in the image-capturing space 16 has been described using the example illustrated in Fig. 12. However, similar measures can also be taken for, for example, the subject 1 of which a position in the image-capturing space 16 is changed dynamically. Note that the position of the subject 1 can be detected by, for example, triangulation using images captured by a plurality of cameras 13. Moreover, the method for detecting the position of the subject 1 is not limited.

[Calibration of Irradiation Apparatus]

Fig. 13 is a schematic diagram used to describe a method for calibrating the irradiation apparatus 31. The case in which the position L of the irradiation apparatus 31 and the reference irradiation direction Dir are calibrated in advance to be recorded in the form of data has been described above. When, for example, the irradiation apparatus 31 is newly installed or the irradiation apparatus 31 is moved, the position L of the irradiation apparatus 31 and the reference irradiation direction Dir are newly calibrated. Here, a method for calibrating the position L of the irradiation apparatus 31 and the reference irradiation direction Dir is described.

A method performed using an operation of the irradiation apparatus 31 and physical positions of a plurality of calibrated cameras 13 is described with reference to Fig. 13. This process is a process performed using coordinates in the real space 17 at the image-capturing-side location. Specifically, the position L of the irradiation apparatus 31 and the reference irradiation direction Dir are calibrated on the basis of rotation angles (pan and tilt) of the irradiation direction when the irradiation apparatus 31 projects the spot 33 onto each of the plurality of cameras 13 and on the basis of installation positions of the plurality of cameras 13.

The plurality of cameras 13 arranged around the image-capturing space 16 is hereinafter referred to as $cam_i$. i is an index set for each camera 13. Further, the installation position of each camera 13 is referred to as $Pcam_i$. $Pcam_i$ is obtained by calibrating a position of the camera 13 (an extrinsic parameter) in the coordinate system for the real space 17.

It is assumed that, for example, rotation angles (pan and tilt) of the irradiation apparatus 31 are controlled to irradiate the spot 33 onto an i-th camera 13 ($cam_i$). In this case, a relationship among the position L of the irradiation apparatus 31, the reference irradiation direction Dir, and the installation position $Pcam_i$ of the i-th camera 13 ($cam_i$) is represented using Formula indicated below.

$$L+t_i \cdot Rpan_i \cdot Rtilt_i \cdot Dir = Pcam_i \quad ... \quad (3)$$

Here, $t_i$ is a positive real number ($t_i \geq 0$). $Rpan_i$ is a rotation matrix represented by a rotation angle $pan_i$ in the azimuth direction when the spot 33 is being projected onto the i-th camera 13. Likewise, $Rtilt_i$ is a rotation matrix represented by a rotation angle $tilt_i$ in the elevation direction when the spot 33 is being projected onto the i-th camera 13.

Therefore, a minimization problem represented using Formula indicated below is solved in order to calculate the position L of the irradiation apparatus 31 and the reference irradiation direction Dir.

$$\min\{\Sigma | Pcam_i - (L+t_i \cdot Rpan_i \cdot Rtilt_i \cdot Dir) |\} \quad ... \quad (4)$$

It is sufficient if an extrinsic parameter is referred to in order to obtain the installation position $Pcam_i$ of each camera 13. Further, $Rpan_i$ and $Rtilt_i$ are recorded every time irradiation onto the camera 13 is performed. Thus, when the laser beam LB is irradiated onto the plurality of cameras 13 and data of rotation angles that is obtained upon the irradiation is used, this makes it possible to solve the minimization problem of Formula (4). This makes it possible to estimate the position L of the irradiation apparatus 31 and the reference irradiation direction Dir.

The arrangement of a plurality of cameras 13 used to perform image-capturing on the subject 1 can be used in this method with no change. This makes it possible to calibrate the irradiation apparatus 31 at low costs. Note that the method performed using the installation position $Pcam_i$ of the camera 13 (cami) has been described with reference to Fig. 13. However, when, for example, a point of which positional coordinates are known is situated on the surface of the green screen 11 or in the image-capturing space 16, the position L of the irradiation apparatus 31 and the reference irradiation direction Dir can also be estimated by performing irradiation onto the point.

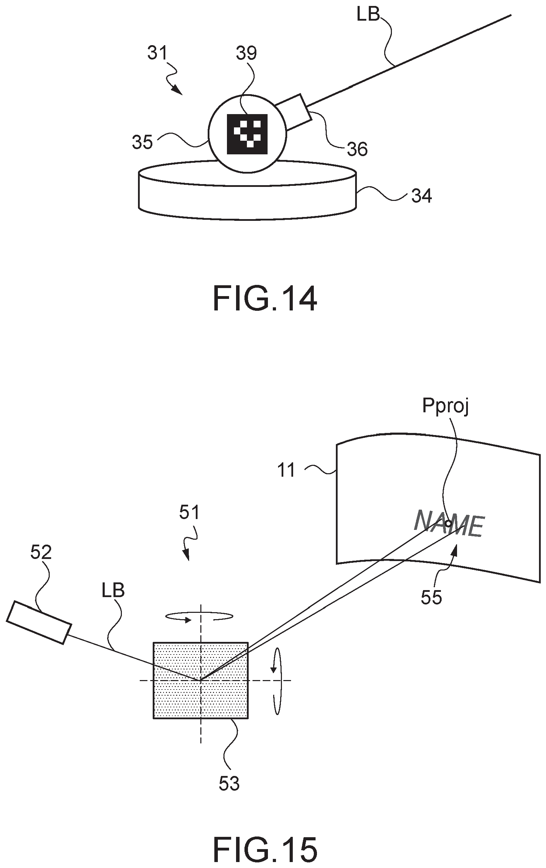

Fig. 14 is a schematic diagram used to describe another method for calibrating the irradiation apparatus. Here, a method for calibrating the position L of the irradiation apparatus 31 and the reference irradiation direction Dir using a position-detection marker 39 is described. In this method, the position-detection marker 39 is provided to the irradiation apparatus 31, as illustrated in Fig. 14.

The position-detection marker 39 is a marker used to detect a position and a pose of a target. Here, a plane marker that represents a position in a plane using a pattern is used. An AR marker such as an ArUco marker can be used as such a marker. The position-detection marker 39 is provided to, for example, a portion that is driven together with the laser pointer 36 of the irradiation apparatus 31 (that is, a portion of which a position or a pose is changed together with the irradiation direction).

When the position L of the irradiation apparatus 31 and the reference irradiation direction Dir are calibrated, the position L of the irradiation apparatus 31 and the reference irradiation direction Dir are calculated on the basis of images of the position-detection marker 39 provided to the irradiation apparatus 31 that are captured by a plurality of cameras 13. For example, the position-detection marker 39 provided to the irradiation apparatus 31 is detected in the images captured by the plurality of cameras 13, and a position and a pose of the position-detection marker 39 are estimated. On the basis of a result of the estimation, the position L of the irradiation apparatus 31 and the reference irradiation direction Dir are estimated. As described above, the use of the position-detection marker 39 makes it possible to, for example, easily calibrate the position L of the irradiation apparatus 31 and the reference irradiation direction Dir without operating the irradiation apparatus 31.

In the control apparatus 41 according to the present embodiment, the virtual point of intersection Pc' at which the virtual line L' connecting the viewpoint position P1' of the subject 1 and the attention-focused position Pin' that the subject 1 is desired to look at intersects the green screen 11 for chroma-key compositing (the virtual screen 19) in the virtual space 18, is determined, as described above. Then, the projection point Pproj (a guidance point) being situated on the actual green screen 11 and corresponding to the virtual point of intersection Pc' is pointed by the irradiation apparatus 31. The pointing of the projection point Pproj makes it possible to present, to the subject 1, a direction in which the subject 1 is desired to look. This makes it possible to guide the line of sight of the subject 1 without reducing the performance in extracting the subject image 3.

A method for performing image-capturing using a green background is used as a method for extracting a foreground from a captured image. For example, when image-capturing is performed surrounding the subject 1, as in the case of volumetric image-capturing, there is a need for an image-capturing environment with an all-round green background that surrounds the subject 1.

When, for example, the line of sight L1 of the subject 1 is desired to be guided to a specific direction, the image-capturing environment such as an all-round green background has a poor feature for guiding the line of sight L1 of the subject 1, and there is a possibility that the subject 1 will have no idea where to pay attention during image-capturing. On the other hand, when, for example, a display is introduced in order to guide the line of sight L1 of the subject 1, there may be a reduction in the accuracy in extracting the subject image 3.

In the present embodiment, the spot 33 is projected onto the green screen 11 by using the irradiation apparatus 31 (a movable laser pointer) irradiating the laser beam LB. As a result, information used to guide the line of sight of the subject 1 can be presented with a minimum area. This makes it possible to sufficiently maintain the performance in extracting the subject image 3.

Further, in the present embodiment, coordinate transformation is performed to transform the attention-focused position Pin (the viewpoint position P2 of the viewer 2) desired to be presented to the subject 1 into the projection point Pproj through the virtual space 18. The viewpoint position P1 of the subject 1 and virtual-space information indicating a shape of the green screen 11 are used for the coordinate transformation. This makes it possible to calculate, with a high degree of accuracy, the projection point Pproj onto which the spot 33 is to be projected in the real space 17, and thus to guide the line of sight L1 of the subject 1 properly and accurately.

Further, in the present embodiment, the line-of-sight guiding system 30 is used for live streaming of a live-action volumetric moving image. For example, it is difficult for the subject 1 of which an image is captured using the green screen 11 to check what the viewer 2 is doing. On the other hand, the use of the line-of-sight guiding system 30 makes it possible to easily present, to the subject 1, where the viewpoint position P2 of the viewer 2 is situated. Thus, the content video 5 viewed by the viewer 2 is a video in which the subject 1 is looking at the viewer 2. This enables the viewer 2 to feel as if the viewer 2 is making eye contact with the subject 1. This makes it possible to achieve interactive communication with a sense of reality.

<Other Embodiments>

The present technology is not limited to the embodiments described above, and can achieve various other embodiments.

In the embodiment described above, a movable laser pointer that presents a single spot 33 is used as the irradiation apparatus 31. The configuration of the irradiation apparatus 31 is not limited, and, for example, an apparatus that can project a pattern other than the single spot 33 as line-of-sight-guidance information may be used as the irradiation apparatus 31.

Fig. 15 schematically illustrates another example of the configuration of the irradiation apparatus. An irradiation apparatus 51 illustrated in Fig. 15 is a laser beam scanning projector that scans the laser beam LB using a movable mirror 53. The irradiation apparatus 51 includes a light source section 52 that emits the laser beam LB, and the movable mirror 53 off which the laser beam LB emitted by the light source section 52 is reflected.

The movable mirror 53 is, for example, a MEMES mirror that uses a microelectromechanical system (MEMS) element. For example, the movable mirror 53 is configured to be capable of being inclined by being rotated about two inclination axes orthogonal to each other on a mirror surface. Further, an angle of inclination of the movable mirror 53 is controlled electrically. This makes it possible to scan the spot 33 of the laser beam LB, and to render any patterns.

As described above, when the laser beam scanning irradiation apparatus 51 is used, the irradiation apparatus 51 may be controlled to project, onto the projection point Pproj (a guidance point), a pattern 55 that includes at least one of a word or a picture. For example, in the example illustrated in Fig. 15, the pattern 55 including word information regarding, for example, a name of the viewer 2 is projected centered at the projection point Pproj. Moreover, word information regarding, for example, speech or the time elapsed may be used. Further, a picture pattern such as a sign or icon that represents, for example, instructions for directions may be projected. This makes it possible to properly guide the line of sight L1 while informing the subject 1 during image-capturing of various information.

The configuration in which a single irradiation apparatus is used has been described in the embodiment above. However, a plurality of irradiation apparatuses may be used. The use of a plurality of irradiation apparatuses makes it possible to shorten an irradiation distance of irradiation performed by each irradiation apparatus. This makes it possible to reduce, for example, irradiation of the laser beam LB onto, for example, a non-irradiation target.

Further, when a plurality of irradiation apparatuses is used, irradiation ranges that the respective irradiation apparatuses take charge of may be set in advance according to green-screen shapes such that pieces of line-of-sight-guidance information such as spots do not overlap. Furthermore, when, for example, a non-irradiation target is situated in an irradiation path of an irradiation apparatus, a spot or the like may be projected using another irradiation apparatus.

The example in which the attention-focused position Pin that the subject 1 is desired to look at is set to be the viewpoint position P2 of the viewer 2 on the assumption that a live video of the subject 1 is provided to the viewer 2, has been described in the embodiment above. The attention-focused position Pin may be set discretionarily. For example, a three-dimensional position designed in the virtual space 18 in advance may be used as the attention-focused position Pin.

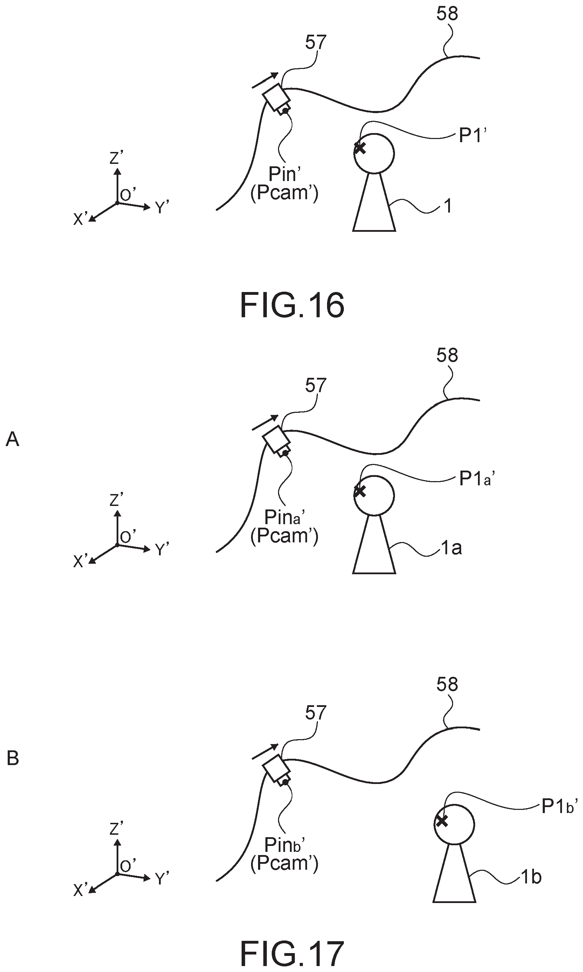

Fig. 16 is a schematic diagram used to describe another example of application of the line-of-sight guiding system. Fig. 16 schematically illustrates the viewpoint position P1' of the subject 1 and the attention-focused position Pin' in the virtual space 18. Here, the attention-focused position Pin' is an image-capturing position Pcam' of image-capturing performed by a virtual camera 57 that is set in the virtual three-dimensional space 18 (the virtual space 18).

The virtual camera 57 is a virtual camera that captures an image of an object that is a target in the virtual space 18 (such as a 3D model of the subject 1), and corresponds to, for example, an image-capturing viewpoint used upon rendering the target. When camerawork (a movement trajectory 58) of the virtual camera 57 is determined in advance, the image-capturing position Pcam' of image-capturing performed by the virtual camera 57 is three-dimensional data that varies chronologically along the movement trajectory 58.

In this case, when an image of the subject 1 is being captured, the spot 33 or the like is projected onto the projection point Pproj calculated such that the line of sight L1 is oriented toward the image-capturing position Pcam'. As a result, the subject 1 of which an image is captured in the real space 17 follows the spot 33 with his/her eyes to move while looking at the virtual camera 57 moving along the movement trajectory 58 in the virtual space 18. This enables the subject 1 to move in the real space 17 while feeling as if image-capturing is performed with movement of the camera.

Fig. 17 is a schematic diagram used to describe another example of application of the line-of-sight guiding system. In Fig. 17, line-of-sight guidance for a plurality of subjects 1 upon capturing a live-action volumetric moving image is described. When images of a plurality of subjects 1 are captured at the same time in volumetric image-capturing, there may be a reduction in the accuracy in extracting the subject image 3 of each subject 1, and this may result in there being the accuracy of the 3D model 6. Thus, images of a plurality of subject 1 may be captured individually. However, when individual image-capturing is performed, uniformity in a scene may be lost due to, for example, there being variations in orientations of lines of sight of the respective subjects 1.

Thus, one attention-focused position Pin is also presented to perform line-of-sight guidance upon performing individual image-capturing. A of Fig. 17 schematically illustrates a viewpoint position $P1_a$' of a subject 1a and an attention-focused position $Pin_a$' in the virtual space 18. Here, the attention-focused position $Pin_a$' is the image-capturing position Pcam' of image-capturing performed by the virtual camera 57 moved along the movement trajectory 58 set in advance.

Further, B of Fig. 17 schematically illustrates a viewpoint position $P1_b$' of a subject 1b and an attention-focused position $Pin_b$' in the virtual space 18. For example, the attention-focused position $Pin_b$' for the subject 1b is set at the same position as the attention-focused position $Pin_a$' for the subject 1a. In other words, the attention-focused position $Pin_b$' is set to be the image-capturing position Pcam' of image-capturing performed by the virtual camera 57 moved along the movement trajectory 58 similar to the movement trajectory 58 illustrated in A of Fig. 17. This results in presenting, to the respective subjects 1, one attention-focused position Pin upon performing individual image-capturing. This makes it possible to perform image-capturing with uniformity when the 3D models 6 of a plurality of people are integrated.

Note that the attention-focused positions Pin presented to a plurality of subjects 1 do not necessarily have to be at the same position. For example, different attention-focused positions Pin or one attention-focused position Pin may be presented to the respective subjects 1 according to, for example, the image-capturing scene. This makes it possible to provide various arrangements upon performing, for example, volumetric image-capturing on a plurality of subjects 1.

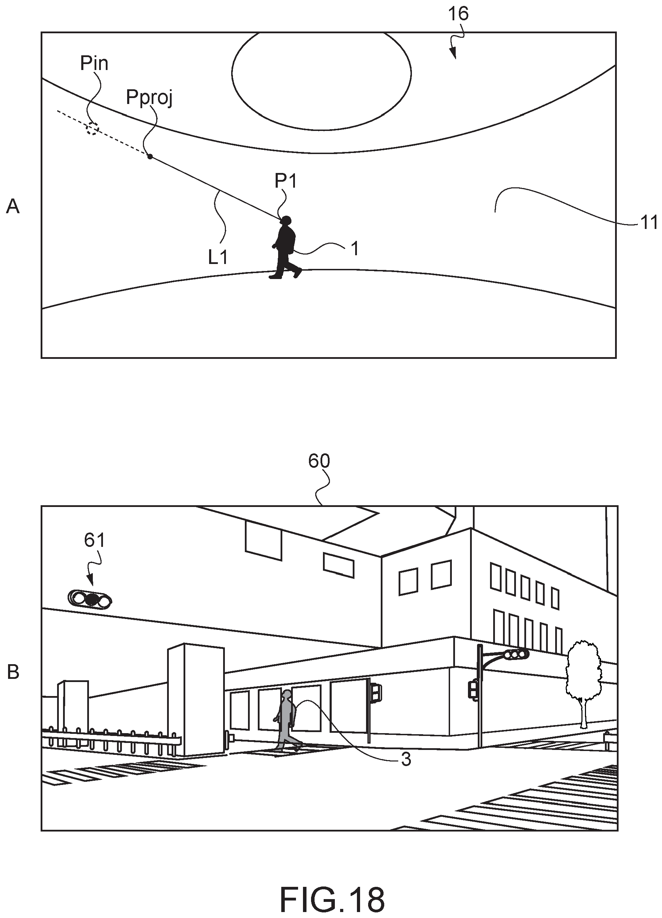

Fig. 18 is a schematic diagram used to describe another example of application of the line-of-sight guiding system. A of Fig. 18 schematically illustrates the image-capturing space 16 at the image-capturing-side location. B of Fig. 18 schematically illustrates a background 60 for combining. The background 60 for combining may be a live-action image or a virtually constructed image such as 3D CG. Here, the attention-focused position Pin that the subject 1 is desired to look at is a position of an attention-focused target 61, in the background 60, that the subject 1 is desired to look at, the background 60 being combined with the subject image 3 extracted from a captured image of the subject 1.

For example, B of Fig. 18 illustrates the subject image 3 having a gray silhouette and being combined with the background 60. For example, a traffic light situated on the upper left in the background 60 in the figure is an attention-focused target 61. Thus, the attention-focused position Pin for the subject 1 is set at a position of the attention-focused target 61 (the traffic light on the upper left). In the image-capturing space 16, the projection point Pproj used to guide the line of sight L1 of the subject 1 to the attention-focused position Pin is calculated, and the spot 33 is projected onto the projection point Pproj, as illustrated in A of Fig. 18. Note that, in A of Fig. 18, the attention-focused position Pin is set forward on the green screen 11, as viewed from the subject 1.

As described above, a position of an object (the attention-focused target 61) in the background 60 corresponding to a combining target can also be set to be the attention-focused position Pin. When the subject image 3 extracted from an image captured by guiding the line of sight L1 of the subject 1, as described above, is combined with the background 60, the subject image 3 is an image in which the subject 1 is looking at an object that is the attention-focused target 61. This makes it possible to provide various arrangements in conformity to the background 60.

The case in which images of a subject are captured using a plurality of cameras has been primarily described above. However, the number of cameras is not limited, and the present technology can also be applied when, for example, image-capturing is performed using a single camera. Further, a position of the camera used to capture an image of the subject does not necessarily have to be fixed. Note that, when a single camera is used, three-dimensional measurement and the like on a green screen can be performed using a dedicated sensor, such as a ranging sensor or a ToF camera, that can perform three-dimensional measurement.

The case in which a live-action volumetric moving image is captured and a 3D model of a subject is generated, has been primarily described so far. The method for capturing an image of a subject or the type of video is not limited. When, for example, image-capturing in which a subject image is extracted from an image captured using a green screen and the subject image is combined with a background with no change is performed, the application of the present technology to such image-capturing also makes it possible to properly guide a line of sight of the subject without reducing the performance in extracting the subject image.

The example in which the control apparatus corresponding to a processor of the line-of-sight guiding controller performs the information processing method according to the present technology has been described above. Without being limited thereto, the information processing method and program according to the present technology may be executed and the information processing apparatus according to the present technology may be implemented by the line-of-sight guiding controller and another computer working cooperatively, the other computer being capable of communicating with the line-of-sight guiding controller through, for example, a network.

In other words, the information processing method and program according to the present technology can be executed not only in a computer system that includes a single computer, but also in a computer system in which a plurality of computers operates cooperatively. Note that, in the present disclosure, the system refers to a set of components (such as apparatuses and modules (parts)) and it does not matter whether all of the components are in a single housing. Thus, a plurality of apparatuses accommodated in separate housings and connected to each other through a network, and a single apparatus in which a plurality of modules is accommodated in a single housing are both the system.

The execution of the information processing method and program according to the present technology by the computer system includes, for example, both the case in which the acquisition of a viewpoint position of a subject, an attention-focused position, and virtual-space information regarding the screen, the determination of a virtual point of intersection, the control on an irradiation direction of irradiation performed by the irradiation apparatus, and the like are executed by a single computer; and the case in which the respective processes are executed by different computers. Further, the execution of the respective processes by a specified computer includes causing another computer to execute a portion of or all of the processes and acquiring a result of it.

In other words, the information processing method and program according to the present technology are also applicable to a configuration of cloud computing in which a single function is shared and cooperatively processed by a plurality of apparatuses via a network.

At least two of the features of the present technology described above can also be combined. In other words, the various features described in the respective embodiments may be combined discretionarily regardless of the embodiments. Further, the various effects described above are not limitative but are merely illustrative, and other effects may be provided.

In the present disclosure, expressions such as "same", "equal", and "orthogonal" include, in concept, expressions such as "substantially the same", "substantially equal", and "substantially orthogonal". For example, the expressions such as "same", "equal", and "orthogonal" also include states within specified ranges (such as a range of +/-10%), with expressions such as "exactly the same", "exactly equal", and "completely orthogonal" being used as references.

Note that the present technology may also take the following configurations.

(1) An information processing apparatus, including:

an acquisition section that acquires

a viewpoint position of a subject of which an image is captured using a screen for chroma-key compositing that is provided in a real space,
an attention-focused position that the subject is desired to look at, and
virtual-space information that indicates a position of the screen in a virtual three-dimensional space;

a determination section that determines a virtual point of intersection of a virtual line and the screen indicated by the virtual-space information, the virtual line connecting the viewpoint position of the subject and the attention-focused position in the virtual three-dimensional space; and
a control section that controls an irradiation direction of irradiation performed by an irradiation apparatus provided in the real space, such that a guidance point on the screen that corresponds to the virtual point of intersection in the real space is pointed.

(2) The information processing apparatus according to (1), in which

the attention-focused position is a viewpoint position of a viewer viewing a display apparatus that displays thereon a subject image extracted from an image of the subject that is captured, with the screen being a background.

(3) The information processing apparatus according to (1) or (2), in which
the acquisition section acquires the viewpoint position of the subject on the basis of images of the subject that are captured by a plurality of cameras provided in the real space such that the screen is a background in an image-capturing range.

(4) The information processing apparatus according to (3), in which
the acquisition section generates the virtual-space information on the basis of images captured by the plurality of cameras.

(5) The information processing apparatus according to (3) or (4), in which
the acquisition section

captures images of a spot using the plurality of cameras, the spot being projected onto the screen by the irradiation apparatus, and

calculates three-dimensional coordinates of the spot on the basis of the images captured using the plurality of cameras.

(6) The information processing apparatus according to at least one of (3) to (5), in which
the control section calculates the irradiation direction on the basis of a position of the irradiation apparatus and a position of the guidance point in the real space.

(7) The information processing apparatus according to (6), in which
the control section calculates rotation angles of the irradiation direction with respect to a reference irradiation direction that serves as a reference of the irradiation direction in the irradiation apparatus.

(8) The information processing apparatus according to (7), in which
the control section calibrates the position of the irradiation apparatus and the reference irradiation direction on the basis of the rotation angles of the irradiation direction when the irradiation apparatus projects a spot onto each of the plurality of cameras and on the basis of installation positions of the plurality of cameras.

(9) The information processing apparatus according to (7), in which

the irradiation apparatus includes a position-detection marker, and
the control section calculates the position of the irradiation apparatus and the reference irradiation direction on the basis of images of the position-detection marker of the irradiation apparatus that are captured by the plurality of cameras.

(10) The information processing apparatus according to at least one of (6) to (9), in which

the control section determines whether an irradiation path that connects the position of the irradiation apparatus and the guidance point in the real space passes through a non-irradiation region in which pointing to the guidance point is to be avoided, and

when it has been determined that the irradiation path passes through the non-irradiation region, the control section stops the pointing to the guidance point.

(11) The information processing apparatus according to at least one of (1) to (10), in which
the irradiation apparatus is a laser pointer that is rotatable in an elevation direction and in an azimuth direction.

(12) The information processing apparatus according to at least one of (1) to (10), in which

the irradiation apparatus is a laser beam scanning projector that scans a laser beam using a movable mirror, and
the control section controls the projector such that a pattern that includes at least one of a word or a picture is projected onto the guidance point.

(13) The information processing apparatus according to at least one of (1) to (12), in which

the screen is an all-around screen that surrounds all of a periphery of an image-capturing space in which an image of the subject is captured, and
the control section controls the irradiation direction of irradiation performed by the irradiation apparatus, such that the guidance point in a region on the all-around screen is pointed, the region being situated in front, as viewed from the subject.

(14) The information processing apparatus according to at least one of (1) to (13), in which
the attention-focused position is an image-capturing position of image-capturing performed by a virtual camera set in the virtual three-dimensional space.

(15) The information processing apparatus according to at least one of (1) to (14), in which
the attention-focused position is a position of an attention-focused target, in a background, that the subject is desired to look at, the background being combined with a subject image extracted from a captured image of the subject.

(16) An information processing method that is performed by a computer system, the information processing method including:

acquiring a viewpoint position of a subject of which an image is captured using a screen for chroma-key compositing that is provided in a real space, an attention-focused position that the subject is desired to look at, and virtual-space information that indicates a position of the screen in a virtual three-dimensional space;

determining a virtual point of intersection of a virtual line and the screen indicated by the virtual-space information, the virtual line connecting the viewpoint position of the subject and the attention-focused position in the virtual three-dimensional space; and

controlling an irradiation direction of irradiation performed by an irradiation apparatus provided in the real space, such that a guidance point on the screen that corresponds to the virtual point of intersection in the real space is pointed.

(17) A computer-readable recording medium that records therein a program that causes a process to be performed, the process including:

acquiring a viewpoint position of a subject of which an image is captured using a screen for chroma-key compositing that is provided in a real space, an attention-focused position that the subject is desired to look at, and virtual-space information that indicates a position of the screen in a virtual three-dimensional space;

determining a virtual point of intersection of a virtual line and the screen indicated by the virtual-space information, the virtual line connecting the viewpoint position of the subject and the attention-focused position in the virtual three-dimensional space; and

controlling an irradiation direction of irradiation performed by an irradiation apparatus provided in the real space, such that a guidance point on the screen that corresponds to the virtual point of intersection in the real space is pointed.

Reference Signs List

| | |
|---|---|
| 1 | subject |
| 2 | viewer |
| 11 | green screen |
| 13 | camera |
| 17 | real space |
| 18 | virtual space |
| 31 | irradiation apparatus |
| 32 | line-of-sight guiding controller |
| 41 | control apparatus |
| 42 | attention-focused position acquiring section |
| 43 | captured image processing section |
| 44 | line-of-sight-guidance processing section |
| 100 | telepresence system |

**Claims**

1. An information processing apparatus, comprising:

an acquisition section that acquires

a viewpoint position of a subject of which an image is captured using a screen for chroma-key compositing that is provided in a real space,

an attention-focused position that the subject is desired to look at, and
virtual-space information that indicates a position of the screen in a virtual three-dimensional space;

a determination section that determines a virtual point of intersection of a virtual line and the screen indicated by the virtual-space information, the virtual line connecting the viewpoint position of the subject and the attention-focused position in the virtual three-dimensional space; and
a control section that controls an irradiation direction of irradiation performed by an irradiation apparatus provided in the real space, such that a guidance point on the screen that corresponds to the virtual point of intersection in the real space is pointed.

2. The information processing apparatus according to claim 1, wherein
the attention-focused position is a viewpoint position of a viewer viewing a display apparatus that displays thereon a subject image extracted from an image of the subject that is captured, with the screen being a background.

3. The information processing apparatus according to claim 1, wherein
the acquisition section acquires the viewpoint position of the subject on a basis of images of the subject that are captured by a plurality of cameras provided in the real space such that the screen is a background in an image-capturing range.

4. The information processing apparatus according to claim 3, wherein
the acquisition section generates the virtual-space information on a basis of images captured by the plurality of cameras.

5. The information processing apparatus according to claim 3, wherein
the acquisition section

captures images of a spot using the plurality of cameras, the spot being projected onto the screen by the irradiation apparatus, and
calculates three-dimensional coordinates of the spot on a basis of the images captured using the plurality of cameras.

6. The information processing apparatus according to claim 3, wherein
the control section calculates the irradiation direction on a basis of a position of the irradiation apparatus and a position of the guidance point in the real space.

7. The information processing apparatus according to claim 6, wherein
the control section calculates rotation angles of the irradiation direction with respect to a reference irradiation direction that serves as a reference of the irradiation direction in the irradiation apparatus.

8. The information processing apparatus according to claim 7, wherein
the control section calibrates the position of the irradiation apparatus and the reference irradiation direction on a basis of the rotation angles of the irradiation direction when the irradiation apparatus projects a spot onto each of the plurality of cameras and on a basis of installation positions of the plurality of cameras.

9. The information processing apparatus according to claim 7, wherein

the irradiation apparatus includes a position-detection marker, and
the control section calculates the position of the irradiation apparatus and the reference irradiation direction on a basis of images of the position-detection marker of the irradiation apparatus that are captured by the plurality of cameras.

10. The information processing apparatus according to claim 6, wherein

the control section determines whether an irradiation path that connects the position of the irradiation apparatus and the guidance point in the real space passes through a non-irradiation region in which pointing to the guidance point is to be avoided, and
when it has been determined that the irradiation path passes through the non-irradiation region, the control section stops the pointing to the guidance point.

11. The information processing apparatus according to claim 1, wherein
the irradiation apparatus is a laser pointer that is rotatable in an elevation direction and in an azimuth direction.

12. The information processing apparatus according to claim 1, wherein

the irradiation apparatus is a laser beam scanning projector that scans a laser beam using a movable mirror, and
the control section controls the projector such that a pattern that includes at least one of a word or a picture is projected onto the guidance point.

13. The information processing apparatus according to claim 1, wherein

the screen is an all-around screen that surrounds all of a periphery of an image-capturing space in which an image of the subject is captured, and
the control section controls the irradiation direction of irradiation performed by the irradiation apparatus, such that the guidance point in a region on the all-around screen is pointed, the region being situated in front, as viewed from the subject.

14. The information processing apparatus according to claim 1, wherein
the attention-focused position is an image-capturing position of image-capturing performed by a virtual camera set in the virtual three-dimensional space.

15. The information processing apparatus according to claim 1, wherein
the attention-focused position is a position of an attention-focused target, in a background, that the subject is desired to look at, the background being combined with a subject image extracted from a captured image of the subject.

16. An information processing method that is performed by a computer system, the information processing method comprising:

acquiring a viewpoint position of a subject of which an image is captured using a screen for chroma-key compositing that is provided in a real space, an attention-focused position that the subject is desired to look at, and virtual-space information that indicates a position of the screen in a virtual three-dimensional space;
determining a virtual point of intersection of a virtual line and the screen indicated by the virtual-space information, the virtual line connecting the viewpoint position of the subject and the attention-focused position in the virtual three-dimensional space; and
controlling an irradiation direction of irradiation performed by an irradiation apparatus provided in the real space, such that a guidance point on the screen that corresponds to the virtual point of intersection in the real space is pointed.

17. A computer-readable recording medium that records therein a program that causes a process to be performed, the process comprising:

acquiring a viewpoint position of a subject of which an image is captured using a screen for chroma-key compositing that is provided in a real space, an attention-focused position that the subject is desired to look at, and virtual-space information that indicates a position of the screen in a virtual three-dimensional space;
determining a virtual point of intersection of a virtual line and the screen indicated by the virtual-space information, the virtual line connecting the viewpoint position of the subject and the attention-focused position in the virtual three-dimensional space; and
controlling an irradiation direction of irradiation performed by an irradiation apparatus provided in the real space, such that a guidance point on the screen that corresponds to the virtual point of intersection in the real space is pointed.

FIG.1

16

11

13(12)   13(12)

1

31   LB   33

## FIG.2

11

C1

31

LB

C2

35   36

33

34

## FIG.3

# FIG.4

12 — Image-capturing section

31 — Irradiation apparatus

32

43 — Captured image processing section

41

Line-of-sight -guidance processing section — 44

40 — Storage

Attention-focused position acquiring section — 42

# FIG.5

18

A

P1'  P2'(Pin')  Pc'

19

L'

Z'
O'
X'  Y'

17

B

13(12)  13(12)

11

P1  Pin  L1

Z
O
X  Y

16  1  31  LB  33 (Pproj)

```
                    ┌─────────────┐
                    │    Start    │
                    └─────────────┘
                           │
                           ▼
         ┌───────────────────────────────────┐
ST101    ║           Measure                 ║
         ║       three-dimensional           ║
         ║            space                  ║
         └───────────────────────────────────┘
                           │
                           ▼ ◄───────────────────┐
         ┌───────────────────────────────────┐   │
ST102    ║       Measure viewpoint           ║   │
         ║          of subject               ║   │
         └───────────────────────────────────┘   │
                           │                      │
                           ▼                      │
         ┌───────────────────────────────────┐   │
ST103    │           Acquire                 │   │
         │   attention-focused position      │   │
         └───────────────────────────────────┘   │
                           │                      │
                           ▼                      │
         ┌───────────────────────────────────┐   │
ST104    │      Perform coordinate           │   │
         │        transformation             │   │
         └───────────────────────────────────┘   │
                           │                      │
                           ▼                      │
         ┌───────────────────────────────────┐   │
ST105    │      Present line-of-sight        │   │
         │      -guidance information         │   │
         └───────────────────────────────────┘   │
                           │                      │
                           ▼                      │
                        ╱──────╲                  │
                      ╱    Is    ╲    no           │
ST106           ╱ image-capturing to ╲ ───────────┘
                ╲  be terminated?  ╱
                  ╲──────────────╱
                           │
                           │ yes
                           ▼
                    ┌─────────────┐
                    │     End     │
                    └─────────────┘
```

FIG.6

FIG.7

FIG.8

FIG.9

EP 4 761 234 A1

P1'  P2'  Pc'

19

S'

Z'

O'  Y'

X'

L'

# FIG.10

Pproj

11

L

Z

O  Y

X

LB(38)

# FIG.11

30

FIG.12

FIG.13

FIG.14

FIG.15

FIG.16

FIG.17

FIG.18

## INTERNATIONAL SEARCH REPORT

| International application No. |
|---|
| **PCT/JP2024/022709** |

**A.    CLASSIFICATION OF SUBJECT MATTER**

*H04N 7/18*(2006.01)i; *H04N 5/262*(2006.01)i
FI:    H04N7/18 K; H04N7/18 U; H04N7/18 Z; H04N5/262 080

According to International Patent Classification (IPC) or to both national classification and IPC

**B.    FIELDS SEARCHED**

Minimum documentation searched (classification system followed by classification symbols)

H04N7/18; H04N5/262; G09G3/00-5/42

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2006-101472 A (SUMITOMO ELECTRIC INDUSTRIES, LTD.) 13 April 2006 (2006-04-13)<br>    entire text | 1-17 |
| A | JP 2004-15106 A (SONY CORPORATION) 15 January 2004 (2004-01-15)<br>    entire text | 1-17 |
| A | JP 2000-276613 A (SONY CORPORATION) 06 October 2000 (2000-10-06)<br>    entire text | 1-17 |
| A | US 2014/0267777 A1 (THOMSON LICENSING) 18 September 2014 (2014-09-18)<br>    entire text | 1-17 |
| A | US 2012/0038742 A1 (ROBINSON, Ian N.) 16 February 2012 (2012-02-16)<br>    entire text | 1-17 |

☐ Further documents are listed in the continuation of Box C.          ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **01 August 2024** | **13 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/022709**

| Patent document cited in search report | | | Publication date (day/month/year) | Patent family member(s) | | | Publication date (day/month/year) |
|---|---|---|---|---|---|---|---|
| JP | 2006-101472 | A | 13 April 2006 | US | 2005/0237380 | A1 | |
| | | | | WO | 2005/104552 | A1 | |
| | | | | EP | 1701546 | A1 | |
| | | | | CN | 1914915 | A | |
| | | | | KR | 10-2007-0044397 | A | |
| | | | | TW | 200601838 | A | |
| JP | 2004-15106 | A | 15 January 2004 | US | 2005/0012745 | A1 | |
| | | | | WO | 2003/103278 | A1 | |
| | | | | EP | 1511300 | A1 | |
| | | | | KR | 10-0967826 | B1 | |
| JP | 2000-276613 | A | 06 October 2000 | (Family: none) | | | |
| US | 2014/0267777 | A1 | 18 September 2014 | EP | 2778819 | A1 | |
| | | | | EP | 2784618 | A2 | |
| US | 2012/0038742 | A1 | 16 February 2012 | (Family: none) | | | |

Form PCT/ISA/210 (patent family annex) (July 2022)

**REFERENCES CITED IN THE DESCRIPTION**

**Patent documents cited in the description**

- WO 2019207922 A